# EUROPEAN PATENT APPLICATION

(11) **EP 4 848 637 A1**
(43) Date of publication of application: **02.12.2026**
(21) Application number: 24921482.6
(22) Date of filing: 29.09.2024
(51) Int. Cl.: H04L 5/00, H04W 72/232, H04L 1/00, H04W 52/02

(54) **COMMUNICATION METHODS AND APPARATUSES, AND STORAGE MEDIUM**

(30) Priority: 02.02.2024 CN 202410154774
(71) Applicant: ZTE Corporation, Shenzhen, Guangdong 518057 (CN)
(72) Inventor: HU, Youjun, Shenzhen, Guangdong 518057 (CN); DAI, Bo, Shenzhen, Guangdong 518057 (CN); CHEN, Mengzhu, Shenzhen, Guangdong 518057 (CN); XU, Jun, Shenzhen, Guangdong 518057 (CN); BIAN, Luanjian, Shenzhen, Guangdong 518057 (CN)
(74) Representative: Ziebig Hengelhaupt Intellectual Property Attorneys Patentanwaltskanzlei PartGmbB
(86) International application number: PCT/CN2024/122448
(87) International publication number: WO 2025/161458

(57) **Abstract**

Provided in the embodiments of the present disclosure are communication methods and apparatuses, and a storage medium. A communication method comprises: receiving a first indication message, wherein the first indication message is used for determining a parameter of a physical downlink control channel (PDCCH), and on the basis of the first indication message, processing the PDCCH.

## Description

The present disclosure claims priority to Chinese Patent Application No. 202410154774.3 filed on February 2, 2024, the entire contents of which are incorporated herein by reference.

### TECHNICAL FIELD

The present disclosure relates to the technical field of communications, and in particular, to a communication method and apparatus, and a storage medium.

### BACKGROUND

Before a network device performs data transmission with a terminal, the network device sends a physical downlink control channel (PDCCH) to the terminal, and then the terminal monitors the PDCCH to obtain downlink control information (DCI).

### SUMMARY

In a first aspect, a communication method is provided, applied to a first node, and the communication method includes: receiving a first indication message, where the first indication message is used to determine a parameter of a PDCCH; and processing the PDCCH based on the first indication message.

In a second aspect, a communication method is provided, applied to a second node, and the communication method includes: sending a first indication message, where the first indication message is used to determine a parameter of a PDCCH; and processing the PDCCH based on the first indication message.

In a third aspect, a communication apparatus is provided, applied to a first node, and the communication apparatus includes: a receiving unit, configured to receive a first indication message, where the first indication message is used to determine a parameter of a PDCCH; and a processing unit, configured to process the PDCCH based on the first indication message.

In a fourth aspect, a communication apparatus is provided, applied to a second node, and the communication apparatus includes: a sending unit, configured to send a first indication message, where the first indication message is used to determine a parameter of a PDCCH; and a processing unit, configured to process the PDCCH based on the first indication message.

In a fifth aspect, a communication apparatus is provided, and the communication apparatus includes: a processor and a memory. The memory is coupled with the processor; the memory stores instructions executable by the processor; and the processor is configured to, upon executing the instructions, enable the communication apparatus to implement the method provided in any one of the first aspect or the second aspect.

In a sixth aspect, a computer-readable storage medium is provided, the computer-readable storage medium stores computer instructions, and when the computer instructions are run on a computer, the computer performs the method provided in any one of the first aspect or the second aspect.

In a seventh aspect, a computer program product containing computer instructions is provided, and when the computer instructions are run on a computer, the computer performs the method provided in any one of the first aspect or the second aspect.

### BRIEF DESCRIPTION OF THE DRAWINGS

The drawings are used to provide a further understanding of the technical solutions of the present disclosure, and constitute a part of the description, and are used together with the embodiments of the present disclosure to explain the technical solutions of the present disclosure, but do not constitute a limitation on the technical solutions of the present disclosure.
FIG. 1 is a schematic structural diagram of a communication system according to the embodiments of the present disclosure.
FIG. 2 is a schematic flowchart of a communication method according to the embodiments of the present disclosure.
FIG. 3 is a schematic diagram of a PDCCH monitoring occasion according to the embodiments of the present disclosure.
FIG. 4 is a schematic diagram of another PDCCH monitoring occasion according to the embodiments of the present disclosure.
FIG. 5 is a schematic diagram of first-type indication information according to the embodiments of the present disclosure.
FIG. 6 is another schematic diagram of first-type indication information according to the embodiments of the present disclosure.
FIG. 7 is a schematic diagram of another PDCCH monitoring occasion according to the embodiments of the present disclosure.
FIG. 8 is a schematic structural diagram of a PDCCH according to the embodiments of the present disclosure.
FIG. 9 is a schematic diagram where information carried by a DMRS is used to indicate information of a PDSCH scheduled by a PDCCH according to the embodiments of the present disclosure.
FIG. 10 is a schematic diagram of chain scheduling of a PDCCH and a PDSCH according to the embodiments of the present disclosure.
FIG. 11 is a schematic flowchart of another communication method according to the embodiments of the present disclosure.
FIG. 12 is a schematic composition diagram of a communication apparatus according to the embodiments of the present disclosure.
FIG. 13 is a schematic composition diagram of another communication apparatus according to the embodiments of the present disclosure.
FIG. 14 is a schematic structural diagram of a communication apparatus according to the embodiments of the present disclosure.

### DETAILED DESCRIPTION

The technical solutions in the embodiments of the present disclosure will be described clearly and completely below with reference to the accompanying drawings in the embodiments of the present disclosure. Obviously, the described embodiments are only a part, rather than all, of the embodiments of the present disclosure. Based on the embodiments in the present disclosure, all other embodiments obtained by those ordinary skilled in the art without creative efforts fall within the protection scope of the present disclosure.

Unless otherwise required by the context, throughout the specification and the claims, the term "comprise" and other forms thereof, such as the third-person singular form "comprises" and the present participle form "comprising", are construed as an open, inclusive meaning, that is, "including, but not limited to". In the description of the specification, the terms "one embodiment", "some embodiments", "exemplary embodiments", "example", "specific example" or "some examples" and the like are intended to indicate that a particular feature, structure, material or characteristic related to the embodiment or example is included in at least one embodiment or example of the present disclosure. The illustrative representation of the above terms does not necessarily refer to the same embodiment or example. Furthermore, the specific feature, structure, material or characteristic described may be included in any one or more embodiments or examples in any appropriate manner.

The terms "first", "second" and the like are used for descriptive purposes only, and are not to be understood as indicating or implying relative importance or implicitly specifying the number of the indicated technical features. Thus, a feature defined with "first", "second" or the like may explicitly or implicitly include one or more of the feature. In the description of the present disclosure, unless otherwise stated, "multiple/a plurality of" means two or more.

In the embodiments of the present disclosure, the words "exemplary (exemplarily)" or "for example/such as/e.g." and the like are used to describe an example, an illustration or an explanation. Any embodiment or design solution described as "exemplary (exemplarily)" or "for example/such as/e.g." in the embodiments of the present disclosure shall not be construed as being more preferred or more advantageous over other embodiments or design solutions. Exactly, the use of the words "exemplary (exemplarily)" or "for example/such as/e.g." and the like is intended to present the related concepts in a specific manner.

In addition, the use of "based on" means open and inclusive, because a process, step, calculation or other actions "based on" one or more of the stated conditions or values may, in practice, be based on additional conditions or values beyond the stated ones.

With the continuous development of communication technologies, from the second generation mobile communication technology to the fifth generation mobile communication technology, the performance and efficiency of communication systems have been significantly improved. However, as people's communication requirements continue to grow, the related communication technologies have become difficult to meet the increasingly complex communication requirements. Especially in urban environments, high-rise buildings, dense crowds and diversified service requirements make communications face huge challenges. Therefore, in order to meet future communication requirements, a communication method oriented to the sixth-generation mobile communication technology (6G) is urgently needed to be proposed and implemented.

The current communication method has low accuracy in monitoring a PDCCH, resulting in a relatively large number of times of blind detection of a terminal, leading to relatively high power consumption of the terminal. How to improve the accuracy of monitoring a PDCCH when being oriented to 6G is an issue to be solved urgently.

Based on this, the embodiments of the present disclosure provide a communication method and apparatus and a storage medium, where a first node processes a PDCCH based on a parameter for monitoring the PDCCH, indicated by a first indication message, which improves the accuracy of monitoring the PDCCH when being oriented to 6G, thereby reducing the number of times of blind detection of the first node, and helping to reduce the power consumption of the first node.

The solutions of the embodiments of the present disclosure are described below with reference to the drawings.

The technical solutions provided in the embodiments of the present disclosure may be applied to various mobile communication networks, for example, a new radio (NR) mobile communication network using the fifth generation mobile communication technology (5G), a future mobile communication network (a 6G wireless communication system), or a system integrating multiple communications, which is not limited in the embodiments of the present disclosure.

In some embodiments, the technical solutions provided in the embodiments of the present disclosure may be applied to PDCCH processing oriented to 6G, where the PDCCH processing includes monitoring, detecting, receiving, or blind detecting.

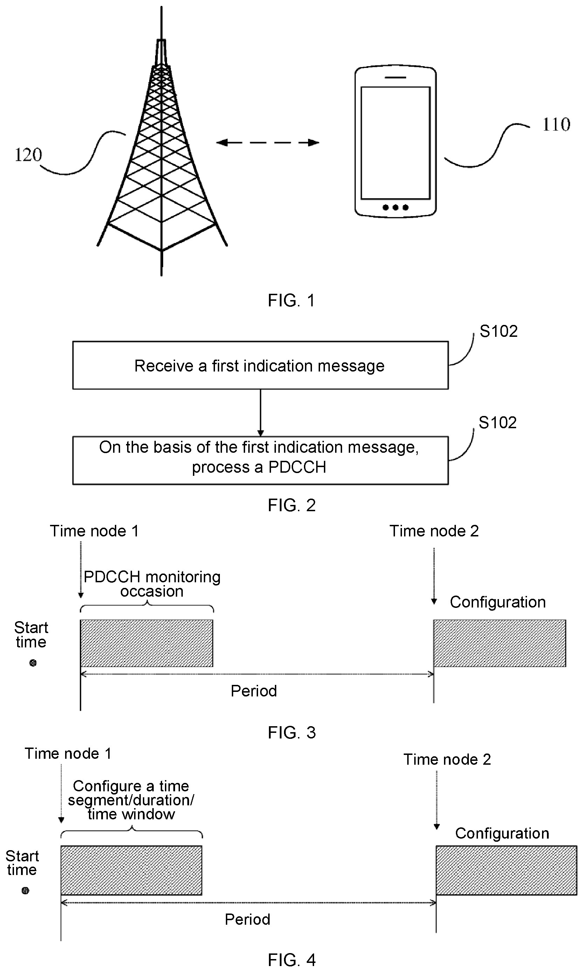

FIG. 1 is a schematic structural diagram of a communication system according to the embodiments of the present disclosure. As shown in FIG. 1, the communication system includes, but is not limited to, a first node 110 and a second node 120. The first node 110 and the second node 120 may perform sending, receiving and related interactions of a wireless signal, etc.

In a wireless communication scenario, the first node 110 and the second node 120 communicate via a wireless channel. For example, the first node 110 is a terminal, the second node 120 is a base station, and the terminal communicates with the base station via a wireless channel. For another example, the first node 110 is a terminal, the second node 120 is a wireless router, and the wireless router communicates with the terminal via a wireless channel. For another example, the first node 110 is a first base station, the second node 120 is a second base station, and the first base station communicates with the second base station via a wireless channel. For another example, the first node 110 is a first terminal, the second node 120 is a second terminal, and the first terminal communicates with the second terminal via a wireless channel. For another example, the first node 110 is a repeater, the second node 120 is a base station, and the base station communicates with the repeater via a wireless channel. For another example, the first node 110 is a terminal, the second node 120 is a repeater, and the repeater communicates with the terminal via a wireless channel. For another example, the first node 110 is a first repeater, the second node 120 is a second repeater, and the first repeater communicates with the second repeater via a wireless channel. For another example, the first node 110 is a base station, the second node 120 is a satellite, and the satellite communicates with the base station via a wireless channel. For another example, the first node 110 is a satellite, the second node 120 is a base station, and the base station communicates with the satellite via a wireless channel. For another example, the first node 110 is a terminal, the second node 120 is a satellite, and the satellite communicates with the terminal via a wireless channel. For another example, the first node 110 is a satellite, the second node 120 is a terminal, and the terminal communicates with the satellite via a wireless channel. For another example, the first node 110 is a ground device, the second node 120 is an aircraft, and the aircraft communicates with the ground device via a wireless channel. For another example, the first node 110 is a first aircraft, the second node 120 is a second aircraft, and the first aircraft communicates with the second aircraft via a wireless channel.

In the present disclosure, the "first" node, "second" node, "first" mode, "second" mode, "first" method, "second" method, "first" matrix, "second" matrix, "first" part, and "second" part, unless otherwise specified, are only used for descriptive differentiation and do not represent a sequence or order.

In the embodiments of the present disclosure, the first node and the second node may also have other names, and for example, the first node may also be referred to as a first communication node, and the second node may also be referred to as a second communication node, etc., which is not limited in the embodiments of the present disclosure.

In some embodiments, the above-mentioned base station may be any node among an evolution base station (evolution nodeB, eNB), a next generation base station (generation nodeB, gNB), a transmission and reception point (TRP), a transmission point (TP), a relay node, a reconfigurable intelligent surface (RIS) and some other access node. According to the size of the provided service coverage region, the base station may further be classified into a macro base station for providing a macro cell, a pico base station for providing a pico cell, and a femto base station for providing a femto cell. With the continuous evolution of wireless communication technologies, future base stations may also adopt other names.

In some embodiments, the above-mentioned terminal may be a device with a wireless transceiving function, for example, a mobile phone, a tablet computer, a wearable device, a vehicle-mounted device, an augmented reality (AR)/virtual reality (VR) device, a laptop computer, an ultra-mobile personal computer (UMPC), a netbook, a personal digital assistant (PDA), an Internet of Things terminal, or the like. The embodiments of the present disclosure do not impose limitations on the type of the terminal.

It should be understood that FIG. 1 is an exemplary structural diagram, and the number of devices included in the communication system shown in FIG. 1 is not limited, and for example, the number of first nodes and the number of second nodes are not limited. Moreover, in addition to the devices shown in FIG. 1, the communication system shown in FIG. 1 may further include other devices, which is not limited thereto.

Next, as shown in FIG. 2, the embodiments of the present disclosure provide a communication method, and the communication method is applied to a first node, where the first node may be the first node 110 shown in FIG. 1. The communication method includes the following S101 and S102.

In S101: a first indication message is received.

In S102: a PDCCH is processed based on the first indication message.

The first indication message is used to determine a parameter of the PDCCH.

In some embodiments, in order to improve the performance of the first node in detecting the PDCCH or reduce the number of times of blind detection of the PDCCH, after a second node configures the first indication message, the second node sends the first indication message to the first node. Correspondingly, the first node receives the first indication message sent from the second node. For ease of description, the following embodiments take the first node being a terminal and the second node being a base station as an example, to illustrate the communication method provided in the embodiments of the present disclosure.

In some embodiments, different parameters of the PDCCH or different rules for processing the PDCCH are determined according to different first indication messages. That is, different first indication information may correspond to different parameters of the PDCCH or different rules for processing the PDCCH.

In some embodiments, the first indication message is used to determine a parameter of the PDCCH, that is, the first indication message includes a PDCCH-related parameter; or, the first indication message is equivalent to the parameter of the PDCCH, that is, the first indication message is exactly the indicated parameter of the PDCCH. Exemplarily, the first indication message includes first-type indication information, second-type indication information, third-type indication information, and fourth-type indication information, where the above four types of indication information are all parameters related to processing the PDCCH, and may all be referred to as the parameter of the PDCCH.

In some embodiments, based on different first indication messages, for example, in cases of different time nodes, different start times, different time segments, different periods, different subcarrier spacings, different offsets, different carriers, different cells, different paths or routing nodes, different transmission points, different beams, different physical regions, different virtual cells, different physical cell identities (PCIs), different bandwidth parts (band width parts, BWPs), different bands, different frequency domain bandwidths, rules for processing the PDCCH are different, parameter sets of the PDCCH are different, or values of the parameter of the PDCCH are different. The parameter set of the PDCCH includes at least one parameter of the PDCCH, and the information content of the parameter includes the first indication message. Exemplarily, the rule for processing the PDCCH includes processing the PDCCH based on first information, and for example, different first information corresponds to different time-frequency resources, different cells, different carriers, different subcarrier spacings, etc.

In some embodiments, the PDCCH includes a first PDCCH and a second PDCCH, and the first indication message includes first information and second information. The first information includes a first time node, a first start time, a first time segment, a first period, a first subcarrier spacing, a first offset, a first carrier, a first cell, a first path or routing node, a first transmission point, a first beam, a first physical region, a first virtual cell, a first PCI, a first BWP, a first band, and a first frequency domain bandwidth. The first node may process the first PDCCH according to the above first information. The second information includes a second time node, a second start time, a second time segment, a second period, a second subcarrier spacing, a second offset, a second carrier, a second cell, a second path or routing node, a second transmission point, a second beam, a second physical region, a second virtual cell, a second PCI, a second BWP, a second band, and a second frequency domain bandwidth. The second PDCCH is processed according to the above second information. That is, different PDCCHs may be processed based on different information.

In some embodiments, the first indication information is used to indicate or select a parameter of the PDCCH.

It needs to be noted that, for ease of description, in the embodiments of the present disclosure, the time node, start time, time segment, period, subcarrier spacing, offset, carrier, cell, path or routing node, transmission point, beam, physical region, virtual cell, PCI, BWP, band, and frequency domain bandwidth information are collectively referred to as specific information.

In some embodiments, determining the parameter of the PDCCH according to the first indication message, further includes at least one of: configuring at least one of a specific DCI format, DCI size, aggregation level, number of candidate sets, subcarrier spacing, frequency domain resource and candidate set position, within a time segment; configuring at least one of a specific DCI format, DCI size, aggregation level, number of candidate sets, subcarrier spacing, frequency domain resource and candidate set position, at different time nodes; configuring at least one of a specific DCI format, DCI size, aggregation level, number of candidate sets, frequency domain resource and candidate set position, at different PDCCH monitoring occasions; and configuring at least one of a specific DCI format, DCI size, aggregation level, number of candidate sets, frequency domain resource and candidate set position, in different search spaces.

In some embodiments, the parameter of the PDCCH includes at least one of: a value range, a list, and a candidate value. The first indication message is used to determine at least one value of the parameter of the PDCCH. Exemplarily, at least one of the value range, the list, and the candidate value is determined by the first indication message. Exemplarily, the first indication message indicates a value range, a list, a candidate value or a value of a PDCCH-related parameter. Exemplarily, the first indication message indicates or configures the parameter of the PDCCH.

In some embodiments, the first indication message includes at least one of: first-type indication information, second-type indication information, and third-type indication information. Different indication information may be determined based on different parameter sets or the same parameter set. For example, the first-type indication information is determined by a first parameter set, the second-type indication information is determined by a second parameter set, and the third-type indication information is determined by a third parameter set. The first parameter set, the second parameter set, and the third parameter set may be the same parameter set, or may be different parameter sets from each other. For each parameter set among the first parameter set, the second parameter set, and the third parameter set, each parameter set includes at least one parameter. The first-type indication information and the second-type indication information may also have other names. For example, the first-type indication information may also be referred to as time domain configuration indication information, and the second-type indication information may also be referred to as frequency domain configuration indication information.

In some embodiments, the first-type indication information is associated with the second-type indication information and/or the third-type indication information; or, the second-type indication information and/or the third-type indication information is associated with the first-type indication information; or, the first-type indication information includes the second-type indication information and/or the third-type indication information; or, the second-type indication information and/or the third-type indication information includes the first-type indication information; or, the second-type indication information is associated with the third-type indication information.

Exemplarily, the search space and the parameter of the PDCCH are associated with a TRP, associated with a time node, associated with port information, associated with a cell, associated with a transmission point, or associated with a beam.

In some embodiments, the first-type indication information is time information; the second-type indication information and/or the third-type indication information is configured based on a time node, or associated with the time information; or a parameter configuration of the PDCCH includes the time information. Exemplarily, the first-type indication information is based on time information, and the parameter of the PDCCH configured based on the time information includes the second-type indication information and the third-type indication information based on time. For example, the parameter of the PDCCH determined by the second-type indication information or the third-type indication information becomes valid at different time nodes.

In some embodiments, the parameter configuration of the PDCCH is determined based on a specific message in the first indication message, or the parameter configuration of the PDCCH is associated with a specific message in the first indication message.

In some embodiments, the first-type indication information includes at least one of: at least one piece of time node information, at least one piece of time segment information, at least one start time, at least one reference time, at least one offset, at least one period, at least one time parameter, and at least one subcarrier spacing. The above time parameter may be used to determine one or more time domain positions for processing the PDCCH; the time node information is used to determine a time domain position of a PDCCH monitoring occasion; and the time segment information is used to determine the time of the PDCCH monitoring occasion. The time segment may be a duration or a window. The time parameter may be a real number or an integer greater than or equal to 0, and is used to determine the time node, time domain position, or time length.

The following exemplarily describes the first node processing the PDCCH based on the first indication message.

As an example, the first node determines the first indication messages of a first PDCCH and a second PDCCH, or determines a parameter of the first PDCCH and a parameter of the second PDCCH, at a first time node and a second time node, or within a first time segment and a second time segment. At the first time node, the first PDCCH is processed according to the parameter of the first PDCCH, and at the second time node, the second PDCCH is processed according to the parameter of the second PDCCH.

As another example, the first node determines the parameter of the first PDCCH according to a first subcarrier spacing (SCS) and/or a first frequency band. The parameter of the second PDCCH is determined according to a second SCS and/or a second frequency band. The first PDCCH is detected according to the first SCS and/or on the first frequency band, and the second PDCCH is detected according to the second SCS and/or on the second frequency band.

As another example, the first node determines the parameter of the first PDCCH according to a first transmission point; and determines the parameter of the second PDCCH according to a second transmission point. The transmission point includes a TRP, a cell, a beam, a neighboring cell, a relay, a base station, or the like. The information of the transmission point includes an index, a number, or indication information for determining the information. The first PDCCH is detected according to the first transmission point, and the second PDCCH is detected according to the second transmission point.

In some embodiments, the time of the PDCCH monitoring occasion includes at least one of: a time length, a number of PDCCH monitoring occasions, and a time domain resource occupied by a PDCCH monitoring occasion.

In some embodiments, the first-type indication information is used to determine at least one time domain position for processing the PDCCH.

As an example, it is taken as an example that the first-type indication information includes two pieces of time node information. Exemplarily, as shown in FIG. 3, it is a schematic diagram of a PDCCH monitoring occasion according to the embodiments of the present disclosure. Referring to FIG. 3, the first-type indication information indicates a time domain position for monitoring a PDCCH at a first PDCCH monitoring occasion (i.e., time node 1), a time domain position for monitoring a PDCCH at a second PDCCH monitoring occasion (i.e., time node 2), and a period between time node 1 and time node 2.

As another example, the first-type indication information includes two pieces of time segment information. Exemplarily, as shown in FIG. 4, it is a schematic diagram of another PDCCH monitoring occasion according to the embodiments of the present disclosure. Referring to FIG. 4, the first-type indication information indicates a start time and a time length for monitoring a PDCCH at a first PDCCH monitoring occasion (i.e., time node 1), a start time and a time length for monitoring a PDCCH at a second PDCCH monitoring occasion (i.e., time node 2), and a period between time node 1 and time node 2.

In some embodiments, the first-type indication information includes at least one of: a DCI format; a DCI size; a number of times of blind detection; an aggregation level; a number of candidate sets; a candidate set position; an interval/period of PDCCH monitoring occasions; and a number of symbols. A parameter of blind detection may be a maximum number of times of blind detection. The candidate set refers to a possible detection position for the PDCCH.

In some embodiments, the DCI format includes an uplink DCI format, different types of DCI formats, or the like. The DCI size includes one or more DCI sizes. When the number of times of blind detection is the maximum number of times of blind detection, a value of the maximum number of times of blind detection includes at least one of {4, 8, 16, 24, 28, 36, 44}. The aggregation level includes at least one of {1, 2, 4, 8, 16, 32, 64}. The candidate set position includes 0 to L-1 or 1 to L, where L is the corresponding aggregation level, and L is an integer greater than or equal to 0. The number of symbols includes at least one of {1, 2, 3, 4, 5, 6, 7, 8, 9, 10, 11, 12, 13, 14}.

In some embodiments, the determination of the candidate set position is related to the aggregation level.

In some embodiments, the determination of the candidate set position is related to the aggregation level and the number of resources, or is related to a number of control channel elements (CCEs). Exemplarily, assuming that the total number of CCEs is X, and based on an integer n of X/L, such as rounding down, the candidate set position corresponding to the aggregation level L includes 0 to n-1, where X is an integer greater than or equal to 1, and n is an integer greater than or equal to 1.

In some embodiments, assuming that there are n candidate set positions, the required number of bits is obtained based on log2(n), such as floor(log2(n)). Alternatively, the number of bits is n; or a range of the number of bits satisfies being greater than or equal to floor(log2(n))and less than or equal to n. Based on the first indication message with the number of bits, the parameter of the PDCCH may be determined.

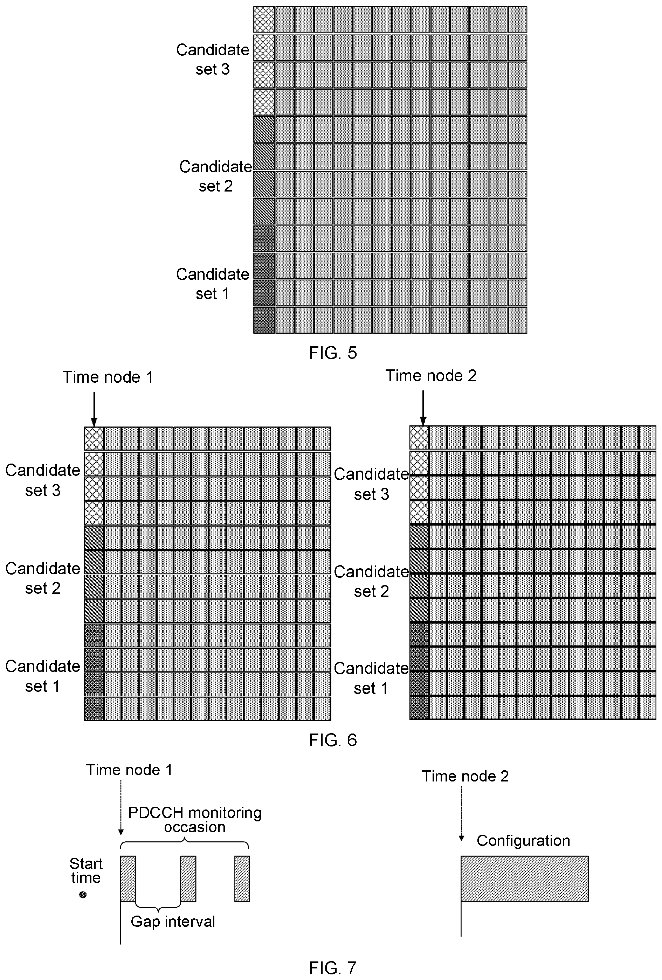

Exemplarily, in a case where the first-type indication information includes an aggregation level and a candidate set identifier, it is assumed that the aggregation level is 4, and the candidate set identifier is candidate2 (candidate set 2). As shown in FIG. 5, it is a schematic diagram of first-type indication information according to the embodiments of the present disclosure. Referring to FIG. 5, based on the first-type indication information, the first node only needs to detect DCI at the candidate2 position. In a case where the first indication message or the first-type indication information includes two time nodes, as shown in FIG. 6, it is another schematic diagram of first-type indication information according to the embodiments of the present disclosure. Referring to FIG. 6, the first node may detect DCI at the candidate2 (candidate set 2) position of time node 1, and detect DCI at the candidate2 (candidate set 2) position of time node 2.

It needs to be noted that the aggregation level is the number of rectangular blocks in the above FIG. 5 or FIG. 6.

In some embodiments, the first node may determine the detection position of the PDCCH based on the aggregation level and the candidate set position.

In some embodiments, the first-type indication information may further include bitmap information, where the bitmap information is used to indicate a candidate set position.

In some embodiments, the first-type indication information may further indicate a start candidate set position. The first node may determine at least one candidate set position or several continuous candidate set positions and perform candidate set detection, based on the start candidate set position and the number of candidate sets.

In some embodiments, in a case where the first-type indication information includes the number of candidate sets, the first node may determine a candidate set position based on the number of candidate sets and a preset rule. For example, the number of candidate sets is X, and the number of candidate sets is indicated based on log2X bit, for example, ceil(log2(X)) bits. For another example, the number of candidate sets is X, and the indication is performed based on bitmap information with X bits.

In some embodiments, the first node may determine the parameter of the PDCCH based on TRP information, a search space identifier, a frequency point, a control resource set identifier, a beam, and a candidate set position.

In some embodiments, the first-type indication information may further include a search space identifier. The search space identifier is an identifier for determining a PDCCH monitoring occasion.

In some embodiments, the first-type indication information may further include duration information of an interval of PDCCH monitoring occasions. Exemplarily, as shown in FIG. 7, it is a schematic diagram of another PDCCH monitoring occasion according to the embodiments of the present disclosure. Referring to FIG. 7, in a case where PDCCH monitoring occasions under time node 1 have an interval, the first-type indication information further includes time information of the interval (i.e., the Gap interval in FIG. 7).

In some embodiments, the first-type indication information may further include an identifier of the first node. The identifier of the first node is used to determine a candidate set position. The identifier of the first node includes being based on a modulo operation, such as UE_ID mod candidate number, candidate number mod UE_ID. Based on the identifier of the first node, it may be determined at which candidate set position or candidate set positions the PDCCH is monitored.

In some embodiments, the above candidate set position includes at least one of: a candidate set position of a specific aggregation level, at least one candidate set position of at least one aggregation level, and a candidate set start position of a specific aggregation level.

In some embodiments, the above number of candidate sets includes at least one of: a number of candidate sets of a specific aggregation level, and a number of continuous candidate sets.

In some embodiments, the second-type indication information includes at least one of: a search space identifier; a control resource set identifier (CORESET ID); frequency domain resource information; BWP information; interleaving information; frequency point information; carrier information; band information; a size of a control channel element (CCE); a number of CCEs of an aggregation level; and a determination mode for a CCE.

Exemplarily, the interleaving information is used to determine whether to interleave, including frequency domain interleaving or time domain interleaving, and a granularity when interleaving, etc. The control resource set identifier is used to determine a frequency domain position of a PDCCH monitoring occasion. The search space identifier is used to determine a time domain position of a PDCCH monitoring occasion. The BWP information is used to determine a frequency domain range in which the PDCCH is located. The frequency point information is used to determine a frequency point at which the PDCCH is located, or frequency point index information is used to determine the frequency point at which the PDCCH is located. The carrier information is used to determine a carrier in which the PDCCH is located, including a carrier index. The band information is used to determine a band in which the PDCCH is located, including number index information. The size of the CCE includes the number of CCEs. The number of CCEs of an aggregation level refers to the number of CCEs of a specific aggregation level. The determination mode for the CCE includes determining that a CCE occupies x1 resource element groups (REGs), determining x2 frequency domain subcarriers, and determining that there are x3 data REs or x4 demodulation reference signal (DMRS) resource elements (REs). The determination mode for the CCE further includes determining a type of the CCE, where different types of the CCE have different RE allocations. The CCE is a basic unit of a control channel, and may also have other names.

In some embodiments, the third-type indication information includes at least one of: quasi co-location (QCL) information; scrambling information of a demodulation reference signal (DMRS); transmission point information; beam configuration information; PCI information; physical region information; virtual cell information; cell information.

Exemplarily, the transmission point information includes transmission and reception point (TRP) information, a cell, a beam, a neighboring cell, a relay, base station information, or the like. The transmission point information may further include an index, a number, or indication information for determining the above information.

Exemplarily, the physical region information is based on a position, or based on position information of a certain area, or based on position information of a certain space, or based on position information based on a line.

Exemplarily, the virtual cell information includes: a virtual cell defined in a cell free scenario, a virtual cell defined under a configuration of a base station, a virtual cell defined under a configuration of a core network, a virtual cell defined based on a beam direction, a virtual cell defined based on a sector region of a site, or the like.

In some embodiments, the first indication message further includes fourth-type indication information. The fourth-type indication information is used to activate or deactivate at least one of: the first-type indication information, the second-type indication information, the third-type indication information.

In some embodiments, the first indication message is also a type of information.

In some embodiments, the first indication message, the parameter of the PDCCH, or the processing of the PDCCH is activated or deactivated according to activation signaling or deactivation signaling; the first indication message, the parameter of the PDCCH, or the processing of the PDCCH is determined according to DCI signaling, media access control control element (MAC CE) signaling, a wake-up signal or a sequence. Alternatively, the parameter of the PDCCH, or the processing of the PDCCH is activated or deactivated according to activation signaling or deactivation signaling. The activation signaling or the deactivation signaling is determined by the first indication message.

In some embodiments, the activation signaling or the deactivation signaling includes RRC signaling, SI, a master information block (MIB), higher layer signaling, MAC CE signaling, DCI, a wake-up signal, or a sequence.

Exemplarily, activating or deactivating the first indication message according to activation signaling or deactivation signaling, includes: activating or deactivating PDCCH monitoring based on specific information, or PDCCH monitoring based on the first information, according to the activation signaling or the deactivation signaling. For example, after receiving the activation signaling, PDCCH monitoring is performed based on time, based on a cell, based on a trajectory or routing node, based on a subcarrier spacing, based on a frequency point, a BWP or a band. Determining the parameter of the PDCCH includes determining the second-type indication information, the third-type indication information, or the like.

Exemplarily, determining the first indication message, the parameter of the PDCCH, or the processing of the PDCCH according to DCI signaling, MAC CE signaling, a wake-up signal or a sequence, includes: indicating or activating or deactivating a set of PDCCH parameters, indicating or activating or deactivating a set of PDCCH parameters in the first indication message, or determining or activating or deactivating the processing of the PDCCH, according to the DCI signaling, the MAC CE signaling, the wake-up signal or the sequence.

Exemplarily, the parameter of the PDCCH is activated or deactivated according to activation signaling or deactivation signaling. The parameter of the PDCCH includes parameters such as a time parameter, a resource parameter, etc., and may also include a parameter determined according to the first indication message. When the parameter of the PDCCH is activated, the processing of the PDCCH is processed according to the activated parameter of the PDCCH.

Exemplarily, activating or deactivating the processing of the PDCCH according to activation signaling or deactivation signaling, includes: activating or deactivating PDCCH monitoring based on specific information, for example, PDCCH monitoring based on a time node, based on a transmission point, based on a routing node, based on a cell, or based on a subcarrier spacing.

Exemplarily, the parameter of the PDCCH, or the processing of the PDCCH is activated or deactivated according to activation signaling or deactivation signaling. The activation signaling or the deactivation signaling is determined by the first indication message, including that: the processing of the PDCCH is PDCCH monitoring based on specific information, PDCCH monitoring with reduced blind detection, and PDCCH monitoring under a specific mode or configuration.

In some embodiments, the parameter of the PDCCH includes at least one of: a downlink control information (DCI) format; a DCI size; a number of times of blind detection; an aggregation level; a number of candidate sets; a candidate set position; an interval/period of PDCCH monitoring occasions; a number of symbols; a search space identifier; a control resource set identifier; frequency domain resource information; BWP information; interleaving information; a frequency point; a size of a CCE; a number of CCEs of an aggregation level; a determination mode for a CCE; QCL information; scrambling information of a DMRS; transmission point information; beam configuration information; PCI information; physical region information; virtual cell information; cell information; a search space identifier; a search space type; a subcarrier spacing; a control resource set identifier; a monitoring period; an offset; a duration; a monitoring symbol; a number of candidate sets; an aggregation level; frequency band information; carrier/band information; transmission point information or TRP information; port information; DMRS information.

The above parameter of the PDCCH may be configured by the first indication message, or may be determined by the first indication message.

In some embodiments, the BWP information includes a subband index, a BWP index. The BWP information is used to determine a frequency domain range in which the PDCCH is located. The interleaving information includes determining whether to interleave, an interleaving granularity, and parameter information related to interleaving. The frequency point information represents at least one frequency point position. The carrier represents at least one carrier, and the carrier information includes index information and secondary cell information. The band information includes a frequency band index. The size of the CCE represents the number of CCEs. The determination mode for the CCE includes forming a CCR according to a number of resource units of a first CCE and a number of resource units of a second CCE, or includes whether the CCEs are continuous or discrete. The transmission point information includes a TRP number or index, a PCI, routing node information, or trajectory node information, etc. The port information includes an antenna port number, the number, a beam direction, a beam number, or the number of antennas. The DMRS information includes a sequence of DMRSs, information carried by a DMRS, a pattern of a DMRS, and a time-frequency resource position of a DMRS.

In some communication systems, the PDCCH is mainly used to indicate control information/signaling, or is used to schedule a data channel or a shared channel.

In some embodiments, after receiving the first indication message, the first node may process the PDCCH based on the parameter of the PDCCH, determined by the first indication message. The first node processing the PDCCH, includes at least one of: detecting the PDCCH, monitoring the PDCCH, blind-detecting the PDCCH, receiving the PDCCH, etc., which is not limited in the embodiments of the present disclosure.

In some embodiments, a frequency domain position for receiving the first indication message is the same as a frequency domain position for processing the PDCCH, or the frequency domain position for receiving the first indication message is different from the frequency domain position for processing the PDCCH. It should be understood that the frequency domain position for receiving the first indication message being different from the frequency domain position for processing the PDCCH can avoid resource contention and meet different coverage performances.

In the embodiments of the present disclosure, the first node may process the PDCCH based on the parameter of the PDCCH, determined by the first indication message, which improves the performance of detecting the PDCCH or reduces the number of times of blind detection of the PDCCH, and helps to reduce the power consumption of the first node.

In some embodiments, in a case where the first node receives the first indication message, or in a case where the first node processes the PDCCH based on the first indication message, the first node processes, under a specific condition, the PDCCH according to a second indication message. The second indication message may be sent to the first node from the second node, or may be pre-configured, or the first indication message may include the second indication message, which is not limited in the embodiments of the present disclosure. In a case where the second indication message is sent from the second node to the first node, the second indication message may be sent before the second node sends the first indication message, or may be sent after the second node sends the first indication message, or may be sent as being included in the first indication message.

In some embodiments, the second indication message may also be default configuration information or predefined configuration information.

In some embodiments, processing the PDCCH according to the second indication message, under the specific condition, includes at least one of: in a case where no downlink control information (DCI) is detected in processing the PDCCH, processing the PDCCH according to the second indication message; in a case where DCI is detected in processing the PDCCH, processing the PDCCH according to an indication of the DCI and the second indication message; in a case where activation signaling or deactivation signaling is received, processing the PDCCH according to the second indication message; in a case where an activation condition or a deactivation condition is satisfied, processing the PDCCH according to the second indication message; in a case where timer expiry is detected, processing the PDCCH according to the second indication message; in a case where a specific parameter is not satisfied, processing the PDCCH according to the second indication message. The specific parameter includes a statistical parameter, a threshold value, a predefined value or a parameter value configured by a higher layer parameter.

Based on negative acknowledgment (NACK) feedback information or not sending feedback information of a physical downlink shared channel (PDSCH) scheduled by a PDCCH, the PDCCH is processed according to the second indication message.

In a case where specific information is sent, the PDCCH is processed according to the second indication message. The specific information includes the parameter of the PDCCH, NACK feedback information, or result information.

In some embodiments, the specific information is sent based on at least one of: a physical uplink control channel (PUCCH), a channel state information report (CSI report), an uplink signal, an uplink channel.

Exemplarily, in a case where no DCI/PDCCH is detected in processing the PDCCH, processing the PDCCH according to the second indication message, includes: in a case where no DCI is detected at at least one time node, detecting the PDCCH according to a PDCCH parameter configured by RRC, a default PDCCH parameter, the first indication message, a predefined PDCCH parameter, such as a search space, a period, an offset, an aggregation level, a number of candidate sets, a frequency domain position, etc.

Exemplarily, in a case where no DCI/PDCCH is detected in processing the PDCCH, processing the PDCCH according to the second indication message, includes: in a case where no DCI/PDCCH is detected on at least one transmission point, cell, carrier, physical region, routing node, detecting the PDCCH according to a PDCCH parameter configured by RRC, a default PDCCH parameter, the first indication message, a predefined PDCCH parameter. It should be understood that, generally, the PDCCH carries the DCI.

Exemplarily, in a case where DCI is detected in processing the PDCCH, processing the PDCCH according to the indication of the DCI and the second indication message, includes: determining detection of the PDCCH according to the indication of the DCI, and an RRC configuration, a default configuration or information of the first indication message. The DCI includes activation signaling or deactivation signaling, where the activation signaling is used to activate at least one set of parameters of the PDCCH, and perform detection according to the parameters of the PDCCH. The deactivation signaling is used to deactivate the current processing of the PDCCH, and fall back to processing the PDCCH based on the default, predefined parameter of the PDCCH.

Exemplarily, in a case where DCI is detected in processing the PDCCH, processing the PDCCH according to the indication of the DCI and the second indication message, includes: selecting or determining at least one set of parameters or at least one parameter of the PDCCH in the second indication message according to the indication of the DCI, and processing the PDCCH according to the parameter(s) of the PDCCH.

In some embodiments, the first indication message includes the second indication message.

In some embodiments, the second indication message and the first indication message are different values of the same parameter.

In some embodiments, the second indication message and the first indication message are configured by separate parameters, respectively.

As an example, in a case where an activation condition or a deactivation condition is satisfied, the PDCCH is processed according to the second indication message. The activation or deactivation condition includes conditions based on a timer, an ACK/NACK feedback, a parameter being satisfied, a threshold parameter being satisfied, a specific parameter being configured, a signal strength satisfying a threshold, etc.

As an example, in a case of based on NACK feedback information or not sending feedback information of a physical downlink shared channel (PDSCH) scheduled by the PDCCH, processing the PDCCH according to the second indication message, includes: in a case where the PDSCH scheduled by the PDCCH fails to be decoded, feeding back an NACK. In this case, the first node has known, according to the NACK, that it is currently unsuitable to continue processing the PDCCH according to the first indication message, and therefore, based on the NACK feedback information, the first node processes the PDCCH according to the second indication message. Alternatively, in a case where the PDCCH fails to be decoded, the first node is in a discontinuous transmission (DTX) state. In this case, the second node does not receive ACK/NACK feedback information, and has known that it is currently unsuitable for the first node to continue processing the PDCCH according to the first indication message, and therefore, it needs to indicate the first node to process the PDCCH according to the second indication message. Alternatively, in a case where the time for the first node to process the PDCCH according to the first indication message exceeds predefined time, or overflows according to a timer, the PDCCH is processed according to the second indication message.

As an example, based on the NACK feedback information, processing the PDCCH according to the second indication message, includes: in a case where the number of NACK feedbacks exceeds a threshold value and there is a NACK feedback; or the feedback ratio of ACKs is lower than a threshold value, the first node processing the PDCCH according to signaling of the second node, or independently according to the second indication message.

As an example, in a case where specific information is sent, processing the PDCCH according to the second indication message, includes that: the result information refers to an evaluation result based on AI or based on a certain mode or under scheduling based on a set of PDCCH parameters, including a training result, a supervision result, a success result or failure result of scheduling, a result of an NACK/ACK feedback, and these results reflect the working performance of the current PDCCH.

In some embodiments, the second indication message includes at least one of: a search space identifier; a search space type; a subcarrier spacing; a control resource set identifier; a monitoring period; an offset; a duration; a monitoring symbol; a number of candidate sets; an aggregation level; a bandwidth part (BWP); frequency band information; carrier information; transmission point information or TRP information; port information; and DMRS information. The monitoring symbol is used to determine a time domain symbol for monitoring the PDCCH.

In some embodiments, the second indication message may further include a candidate set identifier or a candidate set position. The candidate set identifier may also be referred to as a candidate set index or number, used to determine a target candidate set.

In some embodiments, the second indication message includes a default candidate set identifier or position.

As an example, processing the PDCCH according to the second indication message, includes at least one of: processing the PDCCH at a candidate set position other than a first candidate set position, according to the second indication message; processing the PDCCH at a candidate set position other than a candidate set position of a specific aggregation level, according to the second indication message.

The first candidate set position or the candidate set position of the specific aggregation level is determined according to the first indication message or the first-type indication information. That is, the first indication message or the first-type indication information indicates the first candidate set position or the candidate set position of the specific aggregation level.

In some embodiments, the first indication message is indicated based on at least one of: DCI, media access control control element (MAC CE) signaling, radio resource control (RRC) signaling, a sequence, and a wake-up signal.

In some embodiments, the second indication message is configured based on at least one of: RRC signaling, system information (SI), a master information block (MIB), higher layer signaling, MAC CE signaling, DCI, a wake-up signal, and a sequence.

It needs to be noted that, in 5G, a DMRS in a synchronization signal block (SSB) is used to indicate information of an SSB index, and when being oriented to 6G, a DMRS or other reference signals on the PDCCH may carry some PDCCH-related information. Based on this, in some embodiments, the first indication message includes information carried by the DMRS. The information carried by the DMRS is used to indicate configuration information of the PDCCH. The configuration information of the PDCCH is used to indicate at least one of: a number of symbols of the PDCCH; a subcarrier spacing of the PDCCH; a type of the PDCCH; at least one of a type, a size, and a format of DCI carried by the PDCCH; a number of PDCCHs. The following describes the contents indicated by the above configuration information of the PDCCH, respectively.

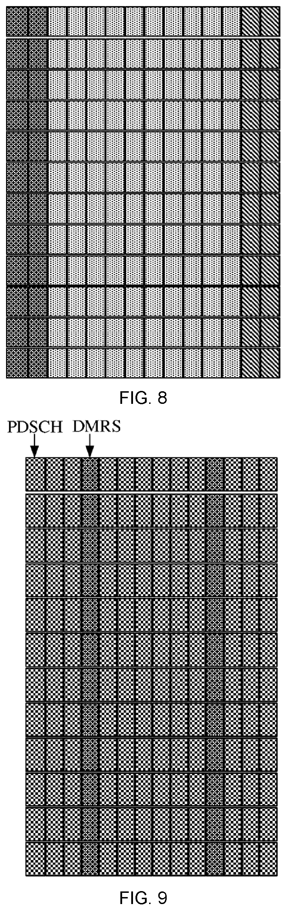

The configuration information of the PDCCH is used to indicate the number of symbols of the PDCCH. Exemplarily, taking as an example that the configuration information of the PDCCH is used to indicate the number of symbols of the PDCCH, the number of symbols of the PDCCH includes 1, 2, 3. For example, different indexes of a DMRS are used to indicate that the number of symbols of the PDCCH is 1, 2. For another example, different indexes of a DMRS are used to indicate that the number of symbols of the PDCCH is 2, 3. For another example, different indexes of a DMRS are used to indicate that the number of symbols of the PDCCH is 1, 2, 3, 4. When the number of symbols of the PDCCH is 4, a structure of the PDCCH may be as shown in FIG. 8: i.e., the first X symbols are at the beginning, and the 4-X symbols are at the end, where X is 1, 2, 3. In FIG. 8, the first X symbols are the first PDCCH, and the 4-X symbols are the second PDCCH.

The configuration information of the PDCCH is used to indicate the subcarrier spacing of the PDCCH. For example, a DMRS may be used to indicate that the subcarrier spacing of the PDCCH is 15 KHz, or 30 KHz, or 60 KHz, or 120 KHz, or 240 KHz, or 480 KHz or 960 KHz. For another example, a DMRS may be used to indicate SCS1, SCS2, or a DMRS is used to indicate SCS1, SCS2, SCS3, SCS4. A start is SCS1, and SCS2, SCS3, and SCS4 have multiple relationships with SCS1.

The configuration information of the PDCCH is used to indicate a type of the PDCCH. The type of the PDCCH includes a common type or a specific type. It should be understood that, the configuration information of the PDCCH is used to indicate the type of the PDCCH, that is, a DMRS is used to indicate the type of the PDCCH, so that when a common synchronization signal (SS) and a specific SS overlap, the SS type transmitted in the slot can be determined, thereby reducing the number of times of blind detection of the first node, thus reducing the power consumption of the first node.

The configuration information of the PDCCH is used to indicate at least one of a type, a size, and a format of DCI carried by the PDCCH. The type of DCI includes uplink or downlink, specific or common. It should be understood that, the configuration information of the PDCCH is used to indicate at least one of the type, the size, and the format of DCI carried by the PDCCH, that is, a DMRS is used to indicate at least one of the type, the size, and the format of DCI carried by the PDCCH, which helps to reduce the number of times of blind detection of the first node, thereby reducing the power consumption of the first node.

The configuration information of the PDCCH is used to indicate the number of PDCCHs.

In some embodiments, the information carried by the DMRS is used to indicate information of the PDSCH scheduled by a PDCCH. The information of the PDSCH scheduled by the PDCCH includes at least one of: a transport block size (TBS); a transport block format or pattern; a modulation and coding scheme (MCS); a modulation order; time domain resource allocation (TDRA); and frequency domain resource allocation (FDRA).

The transport block size includes at least one TBS. The transport block format or pattern is used to determine at least one parameter set. The parameter set includes information of at least one of: a TBS, an MCS, a multiple-input multiple-output layer (MIMO layer), a modulation order, a maximum TBS, FDRA, TDRA, index information, RV information, an HARQ process number, and a subcarrier spacing.

It needs to be noted that, an index of the information of the PDSCH scheduled by the PDCCH is configured by the second node in a list or a group, and the DMRS indicates an index in the list or the group, or indicates one of lists or groups. The information carried by the DMRS being used to indicate the information of the PDSCH scheduled by the PDCCH, is applicable to extremely small data transmission, or fixed-size data transmission, such as a voice over internet protocol (VoIP) service. Exemplarily, as shown in FIG. 9, it is a schematic diagram where information carried by a DMRS is used to indicate information of a PDSCH scheduled by a PDCCH according to the embodiments of the present disclosure.

In some embodiments, the information carried by the PDCCH includes first scheduling information of a shared channel and/or the PDCCH. The first scheduling information includes at least one of: a first resource, a second resource, configuration information of the PDCCH, and scheduling information of the shared channel.

As an example, the first resource includes at least one of: a first time domain resource; a first number of symbols; first bitmap information; and a first frequency domain resource; or, the second resource includes at least one of: a second time domain resource; a second number of symbols; second bitmap information; and a second frequency domain resource. That is, in a case where the first resource is the first time domain resource, the second resource is the second time domain resource.

In some embodiments, the first resource and the second resource satisfy at least one of: the first resource and the second resource being continuous in a frequency domain; the first resource and the second resource being continuous in a time domain; the first resource including the second resource in the frequency domain; the first resource including the second resource in the time domain; the first resource and the second resource not overlapping; the first resource and the second resource use the same mapping mode; the second resource being determined according to the first resource.

The first resource is used to determine a time-frequency domain resource of the PDCCH, and the second resource is used to determine a time-frequency domain resource of the shared channel.

The first resource is used to determine a time-frequency domain resource of the shared channel, and the second resource is used to determine a time-frequency domain resource of the PDCCH.

The first resource is used to determine time-frequency domain resources of the shared channel and the PDCCH, and the second resource is used to determine a time-frequency domain resource of the PDCCH or the shared channel.

The time-frequency domain resource includes a time domain resource and/or a frequency domain resource. The time domain resource position includes a symbol position, a start symbol, and a number of symbols in the time domain. The frequency domain resource position includes a resource unit in the frequency domain, such as a subcarrier/RE/RB (resource block) position, a number of resource units, and a start position of a resource unit. The time-frequency domain resource position includes a resource element corresponding to the resource, such as a position of an RE.

In some embodiments, the second resource being determined according to the first resource, includes: determining a part of resources belonging to the PDCCH or PDSCH based on the resources of the PDCCH and the shared channel.

Exemplarily, the bitmap information (including first bitmap information and second bitmap information) is used to indicate one or more symbols or time domain resource units, or one or more RBs, REs, subcarriers, or frequency domain resource units. For example, time domain resources of one or more symbols in a slot may be indicated by a 14-bit bitmap. For example, frequency domain resources of one or more RBs within a BWP or a bandwidth may be indicated by an N-bit bitmap, where N is an integer greater than or equal to 1.

Exemplarily, the information carried by the PDCCH including the first scheduling information of the shared channel and/or the PDCCH means that, DCI of the first PDCCH indicates scheduling information of the second PDCCH and/or the PDSCH.

In some embodiments, the scheduling information of the shared channel includes at least one of: FDRA; TDRA; virtual resource block to physical resource block mapping (VRB-to-PRB mapping); a new data index (NDI); a redundancy version (RV); a hybrid automatic repeat request (HARQ) process number; a downlink allocation index; a transmit power control (TPC) command for scheduled PUCCH; a PUCCH resource indicator; a PDSCH-to-HARQ feedback timer (PDSCH-to-HARQ_feedback timing indicator); an extended cyclic prefix in channel access control (ChannelAccess-CPext (extended cyclic prefix)); a subcarrier spacing.

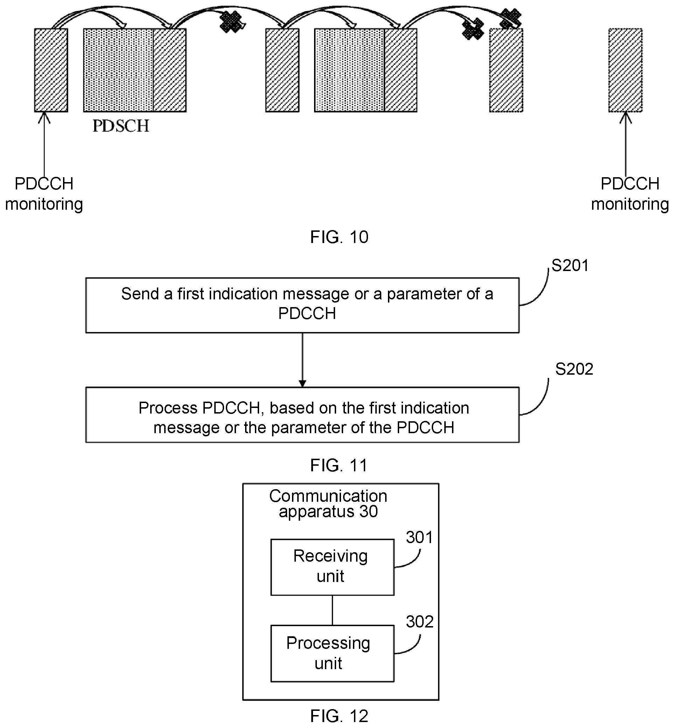

In some embodiments, the shared channel is a PDSCH. That is, the information carried by the PDCCH includes scheduling information of the PDSCH. In this way, chain scheduling of a PDCCH and a PDSCH is implemented. Exemplarily, as shown in FIG. 10, it is a schematic diagram of chain scheduling of a PDCCH and a PDSCH according to the embodiments of the present disclosure. Referring to FIG. 10, in a case where the information carried by the PDCCH includes the scheduling information of the PDSCH, and under a condition where a service is foreknown, the first node does not need blind detection. In addition, the information carried by the PDCCH may also indicate that there is no PDCCH monitoring occasion for a period of time, and the PDCCH monitoring occasion will be skipped. The information carried by the DCCH including the scheduling information of the PDSCH is mainly characterized in that a PDCCH needs to schedule a PDSCH, and also needs to schedule a PDCCH. The "**X**" in FIG. 10 indicates that there is a problem in monitoring a previous PDCCH, and blind detection needs to be performed again. In a case where "**X**" does not appear, the first node may perform PDCCH monitoring based on the scheduling information of the PDSCH, without blind detection or with only a relatively small number of times of blind detection, which helps to reduce the power consumption of the first node.

In some embodiments, the information carried by the PDCCH may also indicate that PDCCH monitoring needs to be performed on a next PDCCH monitoring occasion, or that there is a PDCCH transmission on a next PDCCH monitoring occasion and the first node needs to perform PDCCH monitoring.

In some embodiments, the configuration information of the PDCCH includes at least one of: a search space identifier; a search space type; a control resource set identifier; a monitoring periodicity and offset of a slot; a duration; a monitoring symbol within a slot; a number of candidate sets; an aggregation level; a DCI format; a DCI carrying size; an aggregation level; a candidate set position; interleaving information; mapping type information; and DMRS sequence information, for example, an index of a sequence.

In some embodiments, the first indication message includes scheduling information of a shared channel, or the information carried by the PDCCH includes scheduling information of a physical shared channel.

In some embodiments, the first indication message is used to determine the parameter of the PDCCH, and the first indication message includes scheduling information of a shared channel. The first indication message is carried by the PDCCH or DCI.

In some embodiments, the first indication message is used to determine the parameter of the PDCCH, and the information carried by the PDCCH includes scheduling information of a physical shared channel.

In some embodiments, the shared channel is used to carry one or more DCI, or, the shared channel is used to carry one or more PDCCHs. The shared channel includes a physical downlink shared channel, and the physical downlink shared channel includes at least two types: a first-type physical shared channel and a second-type physical shared channel.

In some embodiments, the DCI or the PDCCH uses the same mapping mode as the shared channel.

In some embodiments, the PDCCH, or one of uplink control information and downlink DCI is carried, based on the physical downlink shared channel.

In some embodiments, the first-type physical shared channel carries the PDCCH or DCI, and the second physical shared channel carries scheduled data, or the PDSCH.

In some embodiments, the shared channel is used to carry one DCI or multiple DCI. The DCI is carried on the shared channel in a combined manner, or the DCI is carried on the shared channel in an independent manner. Exemplarily, the DCI in a combined manner means that multiple information of DCI is combined together, and there is only one DCI. The DCI in an independent manner means that each DCI has its own cyclic redundancy check (CRC), radio network temporary identifier (RNTI) or scheduling information of the corresponding shared channel. Exemplarily, a rank of the physical downlink shared channel is 1; the number of antenna ports is 1; the number of resources is less than R, such as 16; and the frequency domain bandwidth is within a certain bandwidth range.

In some embodiments, the PDCCH includes a first PDCCH and a second PDCCH. In a case where the PDCCH is the first PDCCH, information carried by the first PDCCH includes scheduling information of the second PDCCH. The scheduling information of the PDCCH includes at least one of: FDRA; TDRA; virtual resource block to physical resource block mapping; a new data index (NDI); a redundancy version (RV); a hybrid automatic repeat request (HARQ) process number; a downlink allocation index; a transmit power control (TPC) command for scheduled physical uplink control channel (PUCCH); a PUCCH resource indicator; a PDSCH-to-HARQ feedback timer; an extended cyclic prefix in channel access control; a subcarrier spacing; a search space identifier; a search space type; a control resource set identifier; a monitoring periodicity and offset of a slot; a duration; a monitoring symbol within a slot; a number of candidate sets; an aggregation level; a DCI format; a DCI carrying size; an aggregation level; a candidate set position; interleaving information; mapping type information; DMRS sequence information; a number of DCI; and a number of times of blind detection.

In some embodiments, the first PDCCH and the second PDCCH satisfy at least one of the following relationships: a number of symbols of the second PDCCH being greater than or equal to the number of symbols of the first PDCCH; a time domain position of the first PDCCH being before a time domain position of the second PDCCH; the first PDCCH being mapped according to a CCE, and the second PDCCH being mapped according to a PRB; the first PDCCH being mapped according to a first CCE, and the second PDCCH being mapped according to a second CCE; the first PDCCH corresponding to a first reference signal, and the second PDCCH corresponds to a second reference signal.

As an example, the time domain position of the first PDCCH being before the time domain position of the second PDCCH may be, an ending symbol of the first PDCCH is before a starting symbol of the second PDCCH. The symbol is a time domain resource unit, and the symbol includes other time units such as a slot, a subframe, a radio frame, etc., and also includes a time unit such as a millisecond, a microsecond, a second, etc.

As an example, in a case where the first PDCCH is mapped according to a CCE and the second PDCCH is mapped according to a PRB, a basic resource unit of the first PDCCH is the CCE, a basic resource unit of the second PDCCH is an RE, and a basic frequency domain resource unit is an RB.

As an example, the first PDCCH is mapped according to the first CCE, and the second PDCCH is mapped according to the second CCE, which may be that the number of resource units contained in the first CCE is different from the number of resource units contained in the second CCE, for example, the number of REs is different, the number of RUs (resource units) is different, the number of time domain symbols is different, the number of frequency domain REs is different, etc.

As an example, in a case where the first PDCCH corresponds to the first reference signal and the second PDCCH corresponds to the second reference signal, a pattern, a number of REs, or a position of a resource unit of the first reference signal is different from that of the second reference signal.

In some embodiments, the second PDCCH is used to schedule a shared channel. The second PDCCH and the shared channel have the same mapping mode, time domain resource range, frequency domain resource range, antenna port, or reference signal. Alternatively, the second PDCCH is before the shared channel.

As an example, the above mapping mode includes layer mapping, mapping to a VRB, mapping from a VRP to a PRB, continuous resource mapping or discrete resource mapping.

It needs to be noted that, the time domain resource range involved in the embodiments of the present disclosure refers to a time domain range included from the smallest time domain symbol to the largest time domain symbol, or from the earliest time domain symbol to the latest time domain symbol. Similarly, the frequency domain resource range refers to a frequency domain range included from the smallest frequency domain resource unit to the largest frequency domain resource unit, for example, RB, or from the bottom of the frequency domain to the top of the frequency domain.

In some embodiments, the first indication message is indicated based on at least one of: DCI, MAC CE signaling, RRC signaling, a sequence, and a wake-up signal.

In some embodiments, as shown in FIG. 11, the embodiments of the present disclosure further provide another communication method, and the communication method is applied to a second node. The second node may be the second node 120 shown in the above FIG. 1, and the communication method includes the following S201 and S202.

In S201: a first indication message or a parameter of a PDCCH is sent.

In some embodiments, after the second node configures the first indication message, the second node may send the first indication message to the first node. The first indication message is used to determine a parameter of a PDCCH.

In some embodiments, the second node configuring the first indication message may be that the second node predicts a communication service in a future period of time based on artificial intelligence (AI), and then configures the first indication message based on the predicted communication service in the future period of time.

In S202: the PDCCH is processed based on the first indication message or the parameter of the PDCCH.

In some embodiments, the second node processing the PDCCH, includes transmitting the PDCCH, sending the PDCCH, or the like.

In some embodiments, different parameters of the PDCCH or different rules for processing the PDCCH are determined according to different first indication messages. The first indication message includes first information and second information, and a first PDCCH may be processed according to the first information, and a second PDCCH may be processed according to the second information. The first indication message is used to indicate or select the parameter of the PDCCH.

In some embodiments, the first indication message includes at least one of: first-type indication information, second-type indication information, and third-type indication information.

In some embodiments, the first-type indication information is determined by a first parameter set, the second-type indication information is determined by a second parameter set, and the third-type indication information is determined by a third parameter set. Each parameter set includes at least one parameter.

In some embodiments, the first-type indication information is associated with the second-type indication information and/or the third-type indication information; or, the second-type indication information and/or the third-type indication information is associated with the first-type indication information; or, the first-type indication information includes the second-type indication information and/or the third-type indication information; or, the second-type indication information and/or the third-type indication information includes the first-type indication information; or, the second-type indication information and the third-type indication information are associated.

In some embodiments, the first-type indication information includes at least one of: at least one piece of time node information, at least one piece of time segment information, at least one start time, at least one reference time, at least one offset, at least one period, at least one time parameter, and at least one subcarrier spacing.

In some embodiments, the first-type indication information is used to determine at least one time domain position for processing the PDCCH.

In some embodiments, the time parameter is used to determine one or more time domain positions for processing the PDCCH; the time node information is used to determine a time domain position of a PDCCH monitoring occasion; and the time segment information is used to determine time of the PDCCH monitoring occasion.

In some embodiments, the time of the PDCCH monitoring occasion includes at least one of: a time length, a number of PDCCH monitoring occasions, and a time domain resource occupied by a PDCCH monitoring occasion.

In some embodiments, the first-type indication information includes at least one of: a DCI format; a DCI size; a number of times of blind detection; an aggregation level; a number of candidate sets; a candidate set position; an interval/period of PDCCH monitoring occasions; and a number of symbols.

In some embodiments, the candidate set position includes at least one of: a candidate set position of a specific aggregation level, at least one candidate set position of at least one aggregation level, and a candidate set start position of a specific aggregation level.

In some embodiments, the second-type indication information includes at least one of: a search space identifier; a control resource set identifier; frequency domain resource information; BWP information; interleaving information; a frequency point; a carrier; band information; a size of a CCE; a number of CCEs of an aggregation level; a determination mode for a CCE.

In some embodiments, the third-type indication information includes at least one of: QCL information; scrambling information of a DMRS; transmission point information; beam configuration information; PCI information; physical region information; virtual cell information; cell information.

In some embodiments, the first indication message, the parameter of the PDCCH, or the processing of the PDCCH is activated or deactivated according to activation signaling or deactivation signaling; or, the first indication message, the parameter of the PDCCH, or the processing of the PDCCH is determined according to downlink control information (DCI) signaling, media access control control element (MAC CE) signaling, a wake-up signal or a sequence; or, the parameter of the PDCCH, or the processing of the PDCCH is activated or deactivated according to activation signaling or deactivation signaling. The activation signaling or the deactivation signaling is determined by the first indication message.

In some embodiments, the second node may further send a second indication message to the first node. The second indication message is used to indicate that, under a specific condition, the PDCCH is processed according to the second indication message.

In some embodiments, in a case where no downlink control information (DCI) is detected in processing the PDCCH, the PDCCH is processed according to the second indication message; in a case where DCI is detected in processing the PDCCH, the PDCCH is processed according to the indication of the DCI and the second indication message; in a case where activation signaling or deactivation signaling is received, the PDCCH is processed according to the second indication message; in a case where an activation condition or a deactivation condition is satisfied, the PDCCH is processed according to the second indication message; in a case where timer expiry is detected, the PDCCH is processed according to the second indication message; in a case where a specific parameter is not satisfied, the PDCCH is processed according to the second indication message, where the specific parameter includes a statistical parameter, a threshold value, a predefined value or a parameter value configured by a higher layer parameter; in a case of NACK feedback information or not sending feedback information of a physical downlink shared channel (PDSCH) scheduled by the PDCCH, the PDCCH is processed according to the second indication message; and in a case where specific information is sent, the PDCCH is processed according to the second indication message, where the specific information includes the parameter of the PDCCH, NACK feedback information, or result information.

In some embodiments, the second indication message includes at least one of: a search space identifier; a search space type; a subcarrier spacing; a control resource set identifier; a monitoring period; an offset; a duration; a monitoring symbol; a number of candidate sets; an aggregation level; a BWP; frequency band information; carrier information; transmission point information or TRP information; port information; and DMRS information.

In some embodiments, according to the second indication message, the PDCCH is processed at a candidate set position other than a first candidate set position; according to the second indication message, the PDCCH is processed at a candidate set position other than a candidate set position of a specific aggregation level.

In some embodiments, the second indication message is configured based on at least one of: radio resource control (RRC) signaling, system information (SI), a master information block (MIB), higher layer signaling, MAC CE signaling, DCI, a wake-up signal, and a sequence.

In some embodiments, the first indication message includes information carried by a DMRS.

In some embodiments, the information carried by the DMRS is used to indicate configuration information of the PDCCH. The configuration information of the PDCCH is used at least one of: to indicate a number of symbols of the PDCCH; to indicate a subcarrier spacing of the PDCCH; to indicate a type of the PDCCH, where the type of the PDCCH includes a common type or a specific type; to indicate at least one of a type, a size, and a format of DCI carried by the PDCCH; and to indicate a number of PDCCHs.

In some embodiments, the information carried by the DMRS is used to indicate information of a PDSCH scheduled by the PDCCH. The information of the PDSCH scheduled by the PDCCH includes at least one of: a TBS; a transport block format or pattern; an MCS; a modulation order; TDRA; and FDRA.

In some embodiments, the information carried by the PDCCH includes first scheduling information of a shared channel and/or the PDCCH.

In some embodiments, the first scheduling information includes at least one of: a first resource, a second resource, configuration information of the PDCCH, and scheduling information of the shared channel.

In some embodiments, the first resource includes at least one of: a first time domain resource; a first number of symbols; first bitmap information; and a first frequency domain resource; or, the second resource includes at least one of: a second time domain resource; a second number of symbols; second bitmap information; and a second frequency domain resource.

In some embodiments, the first resource and the second resource satisfy at least one of: the first resource and the second resource being continuous in a frequency domain; the first resource and the second resource being continuous in a time domain; the first resource including the second resource in the frequency domain; the first resource including the second resource in the time domain; the first resource and the second resource not overlapping; the first resource and the second resource using the same mapping mode; the second resource being determined according to the first resource; the first resource being used to determine a time-frequency domain resource of the PDCCH, and the second resource being used to determine a time-frequency domain resource of the shared channel; the first resource being used to determine a time-frequency domain resource of the shared channel, and the second resource being used to determine a time-frequency domain resource of the PDCCH; and the first resource being used to determine time-frequency domain resources of the shared channel and the PDCCH, and the second resource being used to determine a time-frequency domain resource of the PDCCH or a time-frequency domain resource of the shared channel.

In some embodiments, the scheduling information of the shared channel includes at least one of: FDRA; TDRA; virtual resource block to physical resource block mapping; an NDI; an RV; an HARQ process number; a downlink allocation index; a TPC command for scheduled PUCCH; a PUCCH resource indicator; a PDSCH-to-HARQ feedback timer; an extended cyclic prefix in channel access control; and a subcarrier spacing.

In some embodiments, the first indication message includes scheduling information of a shared channel, or the information carried by the PDCCH includes scheduling information of a physical shared channel.

In some embodiments, the shared channel is used to carry one or more DCI, or, the shared channel is used to carry one or more PDCCHs. The shared channel includes a physical downlink shared channel, and the physical downlink shared channel includes at least two types: a first-type physical shared channel and a second-type physical shared channel.

In some embodiments, the above DCI is used to indicate scheduling information of the first-type physical shared channel.

In some embodiments, the PDCCH is a first PDCCH, and information carried by the first PDCCH includes scheduling information of a second PDCCH.

In some embodiments, the first PDCCH and the second PDCCH satisfy at least one of the following relationships: a number of symbols of the second PDCCH being greater than or equal to a number of symbols of the first PDCCH; a time domain position of the first PDCCH being before a time domain position of the second PDCCH; the first PDCCH being mapped according to a CCE, and the second PDCCH being mapped according to a physical resource block (PRB); the first PDCCH being mapped according to a first CCE, and the second PDCCH being mapped according to a second CCE; and the first PDCCH corresponding to a first reference signal, and the second PDCCH corresponding to a second reference signal.

In some embodiments, the second PDCCH is used to schedule a shared channel, and the second PDCCH and the shared channel have the same mapping mode, time domain resource range, frequency domain resource range, antenna port, or reference signal; or, the second PDCCH is before the shared channel.

In some embodiments, the first indication message is indicated based on at least one of: DCI, MAC CE signaling, RRC signaling, a sequence, and a wake-up signal.

It needs to be noted that, for the description of the first indication message, reference may be made to the corresponding description in the embodiments shown in the above FIG. 2, which is not repeated herein.

In the embodiments of the present disclosure, the second node sends the first indication message to the first node, to indicate the first node to process the PDCCH based on the parameter of the PDCCH indicated by the first indication message, which helps to improve the performance of detecting the PDCCH, reduce PDCCH blind detection, and reduce the power consumption of the first node.

The above mainly introduces the solutions provided in the present disclosure from the perspective of interaction among various nodes. It can be understood that in order to implement the above-mentioned functions, various nodes, for example, the first node or the second node, contain the corresponding hardware structures and/or software modules for performing the respective functions. Those skilled in the art should easily realize that, in conjunction with the algorithmic steps of each example described in the embodiments disclosed herein, the present disclosure may be implemented in the form of hardware or a combination of hardware and computer software. Whether a certain function is performed by hardware or computer software driving hardware, depends on the specific applications and design constraints of the technical solutions. Professionals may use different methods for each specific application to implement the described function, but such an implementation should not be regarded as beyond the scope of the present disclosure.

In the embodiments of the present disclosure, the first node or the second node may be divided into function modules according to the method embodiments described above, for example, each functional module may be divided corresponding to each function, or two or more functions may be integrated into a functional module. The above-mentioned integrated module may be implemented in the form of hardware or software. It should be noted that the division of modules in the embodiments of the present disclosure is illustrative, and is merely a logical functional division, and there may be other division methods in actual implementations. The following is an example of dividing each functional module corresponding to each function, for illustration.

FIG. 12 is a schematic composition diagram of a communication apparatus according to the embodiments of the present disclosure. As shown in FIG. 12, the communication apparatus 30 includes a receiving unit 301 and a processing unit 302.

The communication apparatus 30 may be the above first node or a chip in the first node. When the communication apparatus 30 is configured to implement the functions of the first node in the above embodiments, the various units are configured to implement the following functions.

The receiving unit 301 is configured to receive a first indication message, where the first indication message is used to determine a parameter of a physical PDCCH.

The processing unit 302 is configured to process the PDCCH based on the first indication message.

In some embodiments, different parameters of the PDCCH or different rules for processing the PDCCH are determined according to different first indication messages. The first indication message includes first information and second information. A first PDCCH is processed according to the first information, and a second PDCCH is processed according to the second information. The first indication message is used to indicate or select the parameter of the PDCCH.

In some embodiments, the first indication message includes at least one of: first-type indication information, second-type indication information, and third-type indication information.

In some embodiments, the first-type indication information is determined by a first parameter set, the second-type indication information is determined by a second parameter set, and the third-type indication information is determined by a third parameter set. Each parameter set includes at least one parameter.

In some embodiments, the first-type indication information is associated with the second-type indication information and/or the third-type indication information; or the second-type indication information and/or the third-type indication information is associated with the first-type indication information; or the first-type indication information includes the second-type indication information and/or the third-type indication information; or the second-type indication information and/or the third-type indication information includes the first-type indication information; or the second-type indication information is associated with the third-type indication information.

In some embodiments, the first-type indication information includes at least one of: at least one piece of time node information, at least one piece of time segment information, at least one start time, at least one reference time, at least one offset, at least one period, at least one time parameter, and at least one subcarrier spacing.

In some embodiments, the first-type indication information is used to determine at least one time domain position for processing the PDCCH.

In some embodiments, the time parameter is used to determine one or more time domain positions for processing the PDCCH; the time node information is used to determine a time domain position of a PDCCH monitoring occasion; the time segment information is used to determine time of the PDCCH monitoring occasion.

In some embodiments, the time of the PDCCH monitoring occasion includes at least one of: a time length, a number of PDCCH monitoring occasions, and a time domain resource occupied by one of the PDCCH monitoring occasions.

In some embodiments, the first-type indication information includes at least one of: a DCI format; a DCI size; a number of times of blind detection; an aggregation level; a number of candidate sets; a candidate set position; an interval/a period of PDCCH monitoring occasions; a number of symbols.

In some embodiments, the candidate set position includes at least one of: a candidate set position of a specific aggregation level, at least one candidate set position of at least one aggregation level, and a candidate set start position of a specific aggregation level.

In some embodiments, the second-type indication information includes at least one of: a search space identifier; a control resource set identifier; frequency domain resource information; BWP information; interleaving information; a frequency point; a carrier; band information; a size of a CCE; a number of CCEs of an aggregation level; a determination mode for a CCE.

In some embodiments, the third-type indication information includes at least one of: QCL information; scrambling information of a DMRS; transmission point information; beam configuration information; PCI information; physical area information; virtual cell information; cell information.

In some embodiments, the first indication message, the parameter of the PDCCH, or the processing of the PDCCH is activated or deactivated according to activation signaling or deactivation signaling; or the first indication message, the parameter of the PDCCH, or the processing of the PDCCH is determined according to downlink control information (DCI) signaling, media access control control element (MAC CE) signaling, a wake-up signal or a sequence; or the parameter of the PDCCH, or the processing of the PDCCH is activated or deactivated according to activation signaling or deactivation signaling. The activation signaling or the deactivation signaling is determined by the first indication message.

In some embodiments, the processing unit 302 is further configured to: process the PDCCH according to a second indication message, under a specific condition.

In some embodiments, the processing unit 302 is, for example, configured to at least one of: in a case where no downlink control information (DCI) is detected in processing the PDCCH, process the PDCCH according to the second indication message; in a case where DCI is detected in processing the PDCCH, process the PDCCH according to an indication of the DCI and the second indication message; in a case where activation signaling or deactivation signaling is received, process the PDCCH according to the second indication message; in a case where an activation condition or a deactivation condition is satisfied, process the PDCCH according to the second indication message; in a case where timer expiry is detected, process the PDCCH according to the second indication message; in a case where a specific parameter is not satisfied, process the PDCCH according to the second indication message, where the specific parameter includes a statistical parameter, a threshold value, a predefined value or a parameter value configured by a higher layer parameter; based on negative acknowledgment (NACK) feedback information or not sending feedback information of a physical downlink shared channel (PDSCH) scheduled by a PDCCH, process the PDCCH according to the second indication message; in a case where specific information is sent, process the PDCCH according to the second indication message, where the specific information includes the parameter for monitoring the PDCCH, NACK feedback information, or result information.

In some embodiments, the second indication message includes at least one of: a search space identifier; a search space type; a subcarrier spacing; a control resource set identifier; a monitoring periodicity; an offset; a duration; a monitoring symbol within a slot; a number of candidate sets; an aggregation level; a bandwidth part (BWP); frequency band information; carrier information; transmission point information or TRP information; port information; and DMRS information.

In some embodiments, the processing unit 302 is, for example, configured to at least one of: process the PDCCH at a candidate set position other than a first candidate set position, according to the second indication message; process the PDCCH at a candidate set position other than a candidate set position of a specific aggregation level, according to the second indication message.

In some embodiments, the first candidate set position or the candidate set position of the specific aggregation level is determined according to the first indication message.

In some embodiments, the second indication message is configured based on at least one of: radio resource control (RRC) signaling, system information (SI), a master information block (MIB), higher layer signaling, MAC CE signaling, DCI, a wake-up signal, or a sequence.

In some embodiments, the first indication message includes information carried by a DMRS.

In some embodiments, the information carried by the DMRS is used to indicate configuration information of the PDCCH. The configuration information of the PDCCH is used at least one of: to indicate a number of symbols of the PDCCH; to indicate a subcarrier spacing of the PDCCH; to indicate a type of the PDCCH, the type of the PDCCH including a common type or a specific type; to indicate at least one of a type, a size, and a format of DCI carried by the PDCCH; to indicate a number of PDCCHs.

In some embodiments, the information carried by the DMRS is used to indicate information of a PDSCH scheduled by the PDCCH. The information of the PDSCH scheduled by the PDCCH includes at least one of: a transport block size (TBS); a transport block format or pattern; a modulation and coding scheme (MCS); a modulation order; time domain resource allocation (TDRA); frequency domain resource allocation (FDRA).

In some embodiments, information carried by the PDCCH includes first scheduling information of a shared channel and/or the PDCCH.

In some embodiments, the first scheduling information includes at least one of: a first resource, a second resource, configuration information of the PDCCH, and scheduling information of the shared channel.

In some embodiments, the first resource includes at least one of: a first time domain resource; a first number of symbols; first bitmap information; a first frequency domain resource; or, the second resource includes at least one of: a second time domain resource; a second number of symbols; second bitmap information; a second frequency domain resource.

In some embodiments, the first resource and the second resource satisfy at least one of: the first resource and the second resource are continuous in a frequency domain; the first resource and the second resource are continuous in a time domain; the first resource includes the second resource in the frequency domain; the first resource includes the second resource in the time domain; the first resource and the second resource do not overlap; the first resource and the second resource use a same mapping mode; the second resource is determined according to the first resource; the first resource is used to determine a time-frequency domain resource of the PDCCH, and the second resource is used to determine a time-frequency domain resource of the shared channel; the first resource is used to determine a time-frequency domain resource of the shared channel, and the second resource is used to determine a time-frequency domain resource of the PDCCH; the first resource is used to determine time-frequency domain resources of the shared channel and the PDCCH, and the second resource is used to determine a time-frequency domain resource of the PDCCH or a time-frequency domain resource of the shared channel.

In some embodiments, the scheduling information of the shared channel includes at least one of: an FDRA; a TDRA; virtual resource block to physical resource block mapping; a new data index (NDI); a redundancy version (RV); a hybrid automatic repeat request (HARQ) process number; a downlink allocation index; a transmit power control (TPC) command for scheduled physical uplink control channel (PUCCH); a PUCCH resource indicator; a PDSCH-to-HARQ feedback timer; an extended cyclic prefix in channel access control; a subcarrier spacing.

In some embodiments, the configuration information of the PDCCH includes at least one of: a search space identifier; a search space type; a control resource set identifier; a monitoring periodicity and offset of a slot; a duration; a monitoring symbol within a slot; a number of candidate sets; an aggregation level; a DCI format; a DCI carrying size; an aggregation level; a candidate set position; interleaving information; mapping type information; DMRS sequence information.

In some embodiments, the first indication message includes scheduling information of a shared channel, or information carried by the PDCCH includes scheduling information of a physical shared channel.

In some embodiments, the shared channel is used to carry one or more DCI, or the shared channel is used to carry one or more PDCCHs. The shared channel includes a physical downlink shared channel, and the physical downlink shared channel includes at least two types of: a first-type physical shared channel and a second-type physical shared channel.

In some embodiments, the above DCI is used to indicate scheduling information of the first-type physical shared channel.

In some embodiments, the PDCCH is a first PDCCH, and information carried by the first PDCCH includes scheduling information of a second PDCCH.

In some embodiments, the first PDCCH and the second PDCCH satisfy at least one relationship of: a number of symbols of the second PDCCH being greater than or equal to a number of symbols of the first PDCCH; a time domain position of the first PDCCH being before a time domain position of the second PDCCH; the first PDCCH being mapped according to a CCE, and the second PDCCH being mapped according to a physical resource block (PRB); the first PDCCH being mapped according to a first CCE, and the second PDCCH being mapped according to a second CCE; the first PDCCH corresponds to a first reference signal, and the second PDCCH corresponds to a second reference signal.

In some embodiments, the second PDCCH is used to schedule a shared channel, where the second PDCCH and the shared channel have a same mapping mode, time domain resource range, frequency domain resource range, antenna port, or reference signal; or the second PDCCH is before the shared channel.

In some embodiments, the first indication message is indicated based on at least one of: DCI, MAC CE signaling, RRC signaling, a sequence, and a wake-up signal.

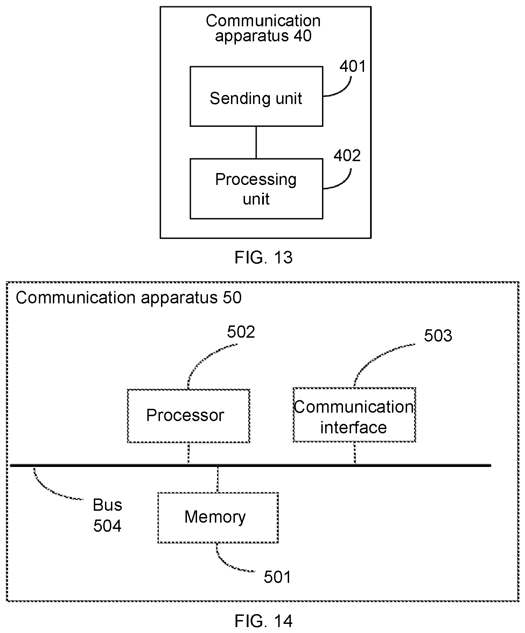

FIG. 13 is a schematic composition diagram of another communication apparatus according to the embodiments of the present disclosure. As shown in FIG. 13, the communication apparatus 40 includes a sending unit 401 and a processing unit 402.

The communication apparatus 40 may be the above second node or a chip in the second node. When the communication apparatus 40 is configured to implement the functions of the second node in the above embodiments, the various units are, for example, configured to implement the following functions.

The sending unit 401 is configured to send a first indication message, where the first indication message is used to determine a parameter of a PDCCH.

The processing unit 402 is configured to process the PDCCH based on the first indication message.

In some embodiments, different parameters of the PDCCH or different rules for processing the PDCCH are determined according to different first indication messages. The first indication message includes first information and second information. A first PDCCH is processed according to the first information, and a second PDCCH is processed according to the second information. The first indication message is used to indicate or select the parameter of the PDCCH.

In some embodiments, the first indication message includes at least one of: first-type indication information, second-type indication information, and third-type indication information.

In some embodiments, the first-type indication information is determined by a first parameter set, the second-type indication information is determined by a second parameter set, and the third-type indication information is determined by a third parameter set. Each parameter set includes at least one parameter.

In some embodiments, the first-type indication information is associated with the second-type indication information and/or the third-type indication information; or the second-type indication information and/or the third-type indication information is associated with the first-type indication information; or the first-type indication information includes the second-type indication information and/or the third-type indication information; or the second-type indication information and/or the third-type indication information includes the first-type indication information; or the second-type indication information is associated with the third-type indication information.

In some embodiments, the first-type indication information includes at least one of: at least one piece of time node information, at least one piece of time segment information, at least one start time, at least one reference time, at least one offset, at least one period, at least one time parameter, and at least one subcarrier spacing.

In some embodiments, the first-type indication information is used to determine at least one time domain position for processing the PDCCH.

In some embodiments, the time parameter is used to determine one or more time domain positions for processing the PDCCH; the time node information is used to determine a time domain position of a PDCCH monitoring occasion; the time segment information is used to determine time of the PDCCH monitoring occasion.

In some embodiments, the time of the PDCCH monitoring occasion includes at least one of: a time length, a number of PDCCH monitoring occasions, and a time domain resource occupied by one of the PDCCH monitoring occasions.

In some embodiments, the first-type indication information includes at least one of: a downlink control information (DCI) format; a DCI size; a number of times of blind detection; an aggregation level; a number of candidate sets; a candidate set position; an interval/a period of PDCCH monitoring occasions; a number of symbols.

In some embodiments, the candidate set position includes at least one of: a candidate set position of a specific aggregation level, at least one candidate set position of at least one aggregation level, and a candidate set start position of a specific aggregation level.

In some embodiments, the second-type indication information includes at least one of: a search space identifier; a control resource set identifier; frequency domain resource information; BWP information; interleaving information; a frequency point; a carrier; band information; a size of a CCE; a number of CCEs of an aggregation level; a determination mode for a CCE.

In some embodiments, the third-type indication information includes at least one of: QCL information; scrambling information of a DMRS; transmission point information; beam configuration information; PCI information; physical area information; virtual cell information; cell information.

In some embodiments, the first indication message, the parameter of the PDCCH, or the processing of the PDCCH is activated or deactivated according to activation signaling or deactivation signaling; or the first indication message, the parameter of the PDCCH, or the processing of the PDCCH is determined according to downlink control information (DCI) signaling, media access control control element (MAC CE) signaling, a wake-up signal or a sequence; or the parameter of the PDCCH, or the processing of the PDCCH is activated or deactivated according to activation signaling or deactivation signaling. The activation signaling or the deactivation signaling is determined by the first indication message.

In some embodiments, the sending unit 401 is further configured to: send a second indication message. The second indication message is used to indicate that: under a specific condition, the PDCCH is processed according to the second indication message.

In some embodiments, processing the PDCCH according to the second indication message, under the specific condition, includes at least one of: in a case where no downlink control information (DCI) is detected in processing the PDCCH, processing the PDCCH according to the second indication message; in a case where DCI is detected in processing the PDCCH, processing the PDCCH according to an indication of the DCI and the second indication message; in a case where activation signaling or deactivation signaling is received, processing the PDCCH according to the second indication message; in a case where an activation condition or a deactivation condition is satisfied, processing the PDCCH according to the second indication message; in a case where timer expiry is detected, processing the PDCCH according to the second indication message; in a case where a specific parameter is not satisfied, processing the PDCCH according to the second indication message, where the specific parameter includes a statistical parameter, a threshold value, a predefined value or a parameter value configured by a higher layer parameter; based on negative acknowledgment (NACK) feedback information or not sending feedback information of a physical downlink shared channel (PDSCH) scheduled by a PDCCH, processing the PDCCH according to the second indication message; in a case where specific information is sent, processing the PDCCH according to the second indication message, where the specific information includes the parameter for monitoring the PDCCH, NACK feedback information, or result information.

In some embodiments, the second indication message includes at least one of: a search space identifier; a search space type; a subcarrier spacing; a control resource set identifier; a monitoring periodicity; an offset; a duration; a monitoring symbol within a slot; a number of candidate sets; an aggregation level; a bandwidth part (BWP); frequency band information; carrier information; transmission point information or TRP information; port information; and DMRS information.

In some embodiments, processing the PDCCH according to the second indication message, includes at least one of: processing the PDCCH at a candidate set position other than a first candidate set position, according to the second indication message; processing the PDCCH at a candidate set position other than a candidate set position of a specific aggregation level, according to the second indication message.

In some embodiments, the first candidate set position or the candidate set position of the specific aggregation level is determined according to the first indication message.

In some embodiments, the second indication message is configured based on at least one of: radio resource control (RRC) signaling, system information (SI), a master information block (MIB), higher layer signaling, media access control control element (MAC CE) signaling, DCI, a wake-up signal, or a sequence.

In some embodiments, the first indication message includes information carried by a DMRS.

In some embodiments, the information carried by the DMRS is used to indicate configuration information of the PDCCH. The configuration information of the PDCCH is used at least one of: to indicate a number of symbols of the PDCCH; to indicate a subcarrier spacing of the PDCCH; to indicate a type of the PDCCH, the type of the PDCCH including a common type or a specific type; to indicate at least one of a type, a size, and a format of DCI carried by the PDCCH; to indicate a number of PDCCHs.

In some embodiments, the information carried by the DMRS is used to indicate information of a PDSCH scheduled by the PDCCH. The information of the PDSCH scheduled by the PDCCH includes at least one of: a TBS; a transport block format or pattern; an MCS; a modulation order; TDRA; and FDRA.

In some embodiments, information carried by the PDCCH includes first scheduling information of a shared channel and/or the PDCCH.

In some embodiments, the first scheduling information includes at least one of: a first resource, a second resource, configuration information of the PDCCH, and scheduling information of the shared channel.

In some embodiments, the first resource includes at least one of: a first time domain resource; a first number of symbols; first bitmap information; a first frequency domain resource; or, the second resource includes at least one of: a second time domain resource; a second number of symbols; second bitmap information; a second frequency domain resource.

In some embodiments, the first resource and the second resource satisfy at least one of: the first resource and the second resource are continuous in a frequency domain; the first resource and the second resource are continuous in a time domain; the first resource includes the second resource in the frequency domain; the first resource includes the second resource in the time domain; the first resource and the second resource do not overlap; the first resource and the second resource use a same mapping mode; the second resource is determined according to the first resource; the first resource is used to determine a time-frequency domain resource of the PDCCH, and the second resource is used to determine a time-frequency domain resource of the shared channel; the first resource is used to determine a time-frequency domain resource of the shared channel, and the second resource is used to determine a time-frequency domain resource of the PDCCH; the first resource is used to determine time-frequency domain resources of the shared channel and the PDCCH, and the second resource is used to determine a time-frequency domain resource of the PDCCH or a time-frequency domain resource of the shared channel.

In some embodiments, the scheduling information of the shared channel includes at least one of: an FDRA; a TDRA; virtual resource block to physical resource block mapping; a new data index (NDI); a redundancy version (RV); a hybrid automatic repeat request (HARQ) process number; a downlink allocation index; a transmit power control (TPC) command for scheduled physical uplink control channel (PUCCH); a PUCCH resource indicator; a PDSCH-to-HARQ feedback timer; an extended cyclic prefix in channel access control; a subcarrier spacing.

In some embodiments, the configuration information of the PDCCH includes at least one of: a search space identifier; a search space type; a control resource set identifier; a monitoring periodicity and offset of a slot; a duration; a monitoring symbol within a slot; a number of candidate sets; an aggregation level; a DCI format; a DCI carrying size; an aggregation level; a candidate set position; interleaving information; mapping type information; DMRS sequence information.

In some embodiments, the first indication message includes scheduling information of a shared channel, or information carried by the PDCCH includes scheduling information of a physical shared channel.

In some embodiments, the shared channel is used to carry one or more DCI, or the shared channel is used to carry one or more PDCCHs. The shared channel includes a physical downlink shared channel, and the physical downlink shared channel includes at least two types of: a first-type physical shared channel and a second-type physical shared channel.

In some embodiments, the above DCI is used to indicate scheduling information of the first-type physical shared channel.

In some embodiments, the PDCCH is a first PDCCH, and information carried by the first PDCCH includes scheduling information of a second PDCCH.

In some embodiments, the first PDCCH and the second PDCCH satisfy at least one relationship of: a number of symbols of the second PDCCH being greater than or equal to a number of symbols of the first PDCCH; a time domain position of the first PDCCH being before a time domain position of the second PDCCH; the first PDCCH being mapped according to a CCE, and the second PDCCH being mapped according to a physical resource block (PRB); the first PDCCH being mapped according to a first CCE, and the second PDCCH being mapped according to a second CCE; the first PDCCH corresponds to a first reference signal, and the second PDCCH corresponds to a second reference signal.

In some embodiments, the second PDCCH is used to schedule a shared channel, where the second PDCCH and the shared channel have a same mapping mode, time domain resource range, frequency domain resource range, antenna port, or reference signal; or the second PDCCH is before the shared channel.

In some embodiments, the first indication message is indicated based on at least one of: DCI, MAC CE signaling, RRC signaling, a sequence, and a wake-up signal.

It should be noted that the units in FIG. 12 and FIG. 13 may also be referred to as modules, and for example, the sending unit may be referred to as a sending module. In addition, in the embodiments shown in FIG. 12 and FIG. 13, the names of each unit may not be the names shown in the figures, and for example, the sending unit may also be referred to as a communication unit, and the receiving unit may also be referred to as a communication unit.

If each unit in FIG. 12 and FIG. 13 is implemented in the form of a software functional module, and sold or used as a separate product, the unit may be stored in a computer-readable storage medium. Based on this understanding, the technical solutions of the embodiments of the present disclosure may be essentially, or a part of the technical solutions that contributes to the related technology, or a part of all of the technical solutions, may be embodied in the form of a software product, and the computer software product is stored in a storage medium, and includes a plurality of instructions to cause a computer device (which may be a personal computer, a server, a network device, etc.) or processor to perform a part or all of the steps of the methods of various embodiments of the present disclosure. The storage medium storing the computer software product includes various types of media capable of storing program codes, such as a U disk (USB flash disk), a mobile hard disk, a read-only memory (ROM), a random access memory (RAM), a magnetic disk, or an optical disk, etc.

In a case where the above communication apparatus 30 or communication apparatus 40 implements the functions of the above integrated modules in the form of hardware, the embodiments of the present disclosure provide a schematic structural diagram of a communication apparatus. As shown in FIG. 14, the communication apparatus 50 includes: a processor 502, a communication interface 503, and a bus 504. In some embodiments, the communication apparatus 50 may further include a memory 501.

The processor 502 may implement or execute various illustrative logical blocks, modules and circuits described in conjunction with the contents of the present disclosure. The processor 502 may be a central processing unit, a general-purpose processor, a digital signal processor, an application specific integrated circuit, a field programmable gate array or any other programmable logic device, a transistor logic device, a hardware component, or any combination thereof, which may implement or execute various illustrative logical blocks, modules and circuits described in conjunction with the disclosed contents of the present disclosure. The processor 502 may also be a combination capable of implementing computing functions, for example, including a combination of one or more microprocessors, or a combination of a digital signal processor (DSP) and a microprocessor.

The communication interface 503 is configured to connect with other devices through a communication network. The communication network may be an Ethernet, a radio access network, a wireless local area network (WLAN), or the like.

The memory 501 may be, but is not limited to, a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure.

As an implementation, the memory 501 may exist independently of the processor 502, and the memory 501 may be connected to the processor 502 through the bus 504, for storing instructions or program codes. When calling and executing the instructions or the program codes stored in the memory 501, the processor 502 is capable of implementing the communication method provided in the embodiments of the present disclosure.

In another implementation, the memory 501 may also be integrated with the processor 502.

The bus 504 may be an extended industry standard architecture (EISA) bus or the like. The bus 504 may be classified into an address bus, a data bus, and a control bus, or the like. For the convenience of representation, only one thick line is used in FIG. 14 for representation, but it does not mean that there is only one bus or one type of bus.

From the description of the above embodiments, those skilled in the art can clearly understand that, for convenience and brevity of description, an illustration is only given by the division of functional modules mentioned above. In practical applications, the functions mentioned above may be allocated to be completed by different functional modules according to requirements. That is, the internal structure of the base station or terminal is divided into different functional modules to complete all or a part of the functions mentioned above.

The embodiments of the present disclosure further provide a computer-readable storage medium ( e.g., a non-transitory computer readable storage medium). All or a part of the procedures in the method embodiments mentioned above may be completed by related hardware indicated by computer instructions. The program may be stored in the computer-readable storage medium mentioned above. The program, when executed, may include the procedures of the method embodiments mentioned above. The computer-readable storage medium may be or a memory of any one of the aforementioned embodiments. The above-mentioned computer-readable storage medium may also be an external storage device of the first node or second node mentioned above, e.g., a plug-in hard disk, a smart memory card (smart media card, SMC), a secure digital (SD) card, a flash card, etc., equipped on the first node or second node mentioned above. Furthermore, the computer-readable storage medium mentioned above may further include both an internal storage unit and an external storage device of the first node or second node mentioned above. The computer-readable storage medium mentioned above is used to store the computer program mentioned above, and other programs and data required for the device or apparatus mentioned above. The computer-readable storage medium mentioned above may further be used to temporarily store data that has been output or is to be output.

The embodiments of the present disclosure further provide a computer program product, the computer product contains a computer program, the computer program product, when executed on a computer, causes the computer to perform any one of the communication methods provided in the above embodiments.

In the embodiments of the present disclosure, the second node sends the first indication message to the first node, to indicate the first node to process the PDCCH based on the parameter of the PDCCH indicated by the first indication message; and the first node processes the PDCCH based on the parameter of the PDCCH indicated by the first indication message, which helps to improve the performance of detecting the PDCCH, reduce the number of times of blind detection of the PDCCH, and reduce the power consumption of the first node.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "comprise/comprises/comprising" does not exclude other components or steps, and "a/an" or "one" does not exclude multiple cases. A single processor or other unit may implement functions of several items listed in the claims. Although certain measures are recorded in dependent claims different from each other, it does not mean that these measures cannot be combined to exert a good effect.

Although the present disclosure is described in conjunction with specific features and embodiments thereof, and it is obvious that various modifications and combinations may be made thereto without departing from the spirit and scope of the present disclosure. Accordingly, the specification and drawings are merely exemplary explanations of the present disclosure as defined by the attached claims and are deemed to cover any and all modifications, variations, combinations or equivalents thereof within the scope of the present disclosure. Obviously, those skilled in the art may make various changes and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations therein.

The above is merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure should be based on the protection scope of the claims.

## Claims

1. A communication method, applied to a first node, wherein the method comprises:
receiving a first indication message, wherein the first indication message is used to determine a parameter of a physical downlink control channel, PDCCH; and
processing the PDCCH based on the first indication message.

2. The method according to claim 1, wherein at least one of:
different parameters of the PDCCH or different rules for processing the PDCCH are determined according to different first indication messages;
the first indication message comprises first information and second information, a first PDCCH is processed according to the first information, and a second PDCCH is processed according to the second information;
the first indication message is used to indicate or select the parameter of the PDCCH.

3. The method according to claim 1, wherein the first indication message comprises at least one of:
first-type indication information, second-type indication information, and third-type indication information.

4. The method according to claim 3, wherein the first-type indication information is determined by a first parameter set, the second-type indication information is determined by a second parameter set, and the third-type indication information is determined by a third parameter set; wherein the first parameter set, the second parameter set, and the third parameter set each comprise at least one parameter.

5. The method according to claim 3, wherein
the first-type indication information is associated with the second-type indication information and/or the third-type indication information; or
the second-type indication information and/or the third-type indication information is associated with the first-type indication information; or
the first-type indication information comprises the second-type indication information and/or the third-type indication information; or
the second-type indication information and/or the third-type indication information comprises the first-type indication information; or
the second-type indication information is associated with the third-type indication information.

6. The method according to claim 3, wherein the first-type indication information comprises at least one of: at least one piece of time node information, at least one piece of time segment information, at least one start time, at least one reference time, at least one offset, at least one period, at least one time parameter, and at least one subcarrier spacing.

7. The method according to claim 3, wherein the first-type indication information is used to determine at least one time domain position for processing the PDCCH.

8. The method according to claim 6, wherein
the at least one time parameter is used to determine one or more time domain positions for processing the PDCCH;
the at least one piece of time node information is used to determine a time domain position of a PDCCH monitoring occasion;
the at least one piece of time segment information is used to determine time of the PDCCH monitoring occasion.

9. The method according to claim 8, wherein the time of the PDCCH monitoring occasion comprises at least one of: a time length, a number of PDCCH monitoring occasions, and a time domain resource occupied by one of the PDCCH monitoring occasions.

10. The method according to claim 3, wherein the first-type indication information comprises at least one of:
a downlink control information, DCI, format;
a DCI size;
a number of times of blind detection;
an aggregation level;
a number of candidate sets;
a candidate set position;
an interval/a period of PDCCH monitoring occasions;
a number of symbols.

11. The method according to claim 10, wherein the candidate set position comprises at least one of: a candidate set position of a specific aggregation level, at least one candidate set position of at least one aggregation level, and a candidate set start position of a specific aggregation level.

12. The method according to claim 3, wherein the second-type indication information comprises at least one of:
a search space identifier;
a control resource set identifier;
frequency domain resource information;
bandwidth part, BWP, information;
interleaving information;
a frequency point;
a carrier;
band information;
a size of a control channel element, CCE;
a number of CCEs of an aggregation level;
a determination mode for a CCE.

13. The method according to claim 3, wherein the third-type indication information comprises at least one of:
quasi co-location, QCL, information;
scrambling information of a demodulation reference signal, DMRS;
transmission point information;
beam configuration information;
physical cell identity, PCI, information;
physical area information;
virtual cell information;
cell information.

14. The method according to claim 1, wherein
the first indication message, the parameter of the PDCCH, or the processing of the PDCCH is activated or deactivated according to activation signaling or deactivation signaling; or
the first indication message, the parameter of the PDCCH, or the processing of the PDCCH is determined according to DCI signaling, media access control control element, MAC CE, signaling, a wake-up signal or a sequence; or
the parameter of the PDCCH, or the processing of the PDCCH is activated or deactivated according to activation signaling or deactivation signaling, wherein the activation signaling or the deactivation signaling is determined by the first indication message.

15. The method according to claim 1, further comprising:
processing the PDCCH according to a second indication message, under a specific condition.

16. The method according to claim 15, wherein processing the PDCCH according to the second indication message, under the specific condition, comprises at least one of:
in a case where no DCI is detected in processing the PDCCH, processing the PDCCH according to the second indication message;
in a case where DCI is detected in processing the PDCCH, processing the PDCCH according to an indication of the DCI and the second indication message;
in a case where activation signaling or deactivation signaling is received, processing the PDCCH according to the second indication message;
in a case where an activation condition or a deactivation condition is satisfied, processing the PDCCH according to the second indication message;
in a case where timer expiry is detected, processing the PDCCH according to the second indication message;
in a case where a specific parameter is not satisfied, processing the PDCCH according to the second indication message, wherein the specific parameter comprises a statistical parameter, a threshold value, a predefined value or a parameter value configured by a higher layer parameter;
based on negative acknowledgment, NACK, feedback information or not sending feedback information of a physical downlink shared channel, PDSCH, scheduled by a PDCCH, processing the PDCCH according to the second indication message;
in a case where specific information is sent, processing the PDCCH according to the second indication message, wherein the specific information comprises the parameter of the PDCCH, NACK feedback information, or result information.

17. The method according to claim 15, wherein the second indication message comprises at least one of:
a search space identifier;
a search space type;
a subcarrier spacing;
a control resource set identifier;
a monitoring period;
an offset;
a duration;
a monitoring symbol;
a number of candidate sets;
an aggregation level;
a BWP;
frequency band information;
carrier information;
transmission point information or transmission and reception point, TRP, information;
port information;
DMRS information.

18. The method according to claim 15, wherein processing the PDCCH according to the second indication message, comprises at least one of:
processing the PDCCH at a candidate set position other than a first candidate set position, according to the second indication message;
processing the PDCCH at a candidate set position other than a candidate set position of a specific aggregation level, according to the second indication message.

19. The method according to claim 18, wherein the first candidate set position or the candidate set position of the specific aggregation level is determined according to the first indication message.

20. The method according to claim 15, wherein the second indication message is configured based on at least one of: radio resource control, RRC, signaling, system information, SI, a master information block, MIB, higher layer signaling, MAC CE signaling, DCI, a wake-up signal, or a sequence.

21. The method according to claim 1, wherein the first indication message comprises information carried by a DMRS.

22. The method according to claim 21, wherein the information carried by the DMRS is used to indicate configuration information of the PDCCH;
the configuration information of the PDCCH is used at least one of:
to indicate a number of symbols of the PDCCH;
to indicate a subcarrier spacing of the PDCCH;
to indicate a type of the PDCCH, the type of the PDCCH comprising a common type or a specific type;
to indicate at least one of a type, a size, and a format of DCI carried by the PDCCH;
to indicate a number of PDCCHs.

23. The method according to claim 21, wherein the information carried by the DMRS is used to indicate information of a PDSCH scheduled by the PDCCH;
the information of the PDSCH scheduled by the PDCCH comprises at least one of:
a transport block size, TBS;
a transport block format or pattern;
a modulation and coding scheme, MCS;
a modulation order;
time domain resource allocation, TDRA;
frequency domain resource allocation, FDRA.

24. The method according to claim 1, wherein information carried by the PDCCH comprises first scheduling information of a shared channel and/or the PDCCH.

25. The method according to claim 24, wherein the first scheduling information comprises at least one of:
a first resource, a second resource, configuration information of the PDCCH, and scheduling information of the shared channel.

26. The method according to claim 25, wherein
the first resource comprises at least one of:
a first time domain resource;
a first number of symbols;
first bitmap information;
a first frequency domain resource;
or, the second resource comprises at least one of:
a second time domain resource;
a second number of symbols;
second bitmap information;
a second frequency domain resource.

27. The method according to claim 25, wherein the first resource and the second resource satisfy at least one of:
the first resource and the second resource are continuous in a frequency domain;
the first resource and the second resource are continuous in a time domain;
the first resource comprises the second resource in the frequency domain;
the first resource comprises the second resource in the time domain;
the first resource and the second resource do not overlap;
the first resource and the second resource use a same mapping mode;
the second resource is determined according to the first resource;
the first resource is used to determine a time-frequency domain resource of the PDCCH, and the second resource is used to determine a time-frequency domain resource of the shared channel;
the first resource is used to determine a time-frequency domain resource of the shared channel, and the second resource is used to determine a time-frequency domain resource of the PDCCH;
the first resource is used to determine time-frequency domain resources of the shared channel and the PDCCH, and the second resource is used to determine a time-frequency domain resource of the PDCCH or a time-frequency domain resource of the shared channel.

28. The method according to claim 25, wherein the scheduling information of the shared channel comprises at least one of:
an FDRA;
a TDRA;
virtual resource block to physical resource block mapping;
a new data index, NDI;
a redundancy version, RV;
a hybrid automatic repeat request, HARQ, process number;
a downlink allocation index;
a transmit power control, TPC, command for scheduled physical uplink control channel, PUCCH;
a PUCCH resource indicator;
a PDSCH-to-HARQ feedback timer;
an extended cyclic prefix in channel access control;
a subcarrier spacing.

29. The method according to claim 25, wherein the configuration information of the PDCCH comprises at least one of:
a search space identifier;
a search space type;
a control resource set identifier;
a monitoring periodicity and offset of a slot;
a duration;
a monitoring symbol within a slot;
a number of candidate sets;
an aggregation level;
a DCI format;
a DCI carrying size;
an aggregation level;
a candidate set position;
interleaving information;
mapping type information;
DMRS sequence information.

30. The method according to claim 1, wherein the first indication message comprises scheduling information of a shared channel, or information carried by the PDCCH comprises scheduling information of a physical shared channel.

31. The method according to claim 30, wherein at least one of:
the shared channel is used to carry one or more DCI, or the shared channel is used to carry one or more PDCCHs; wherein the shared channel comprises a physical downlink shared channel, and the physical downlink shared channel comprises at least two types of: a first-type physical shared channel and a second-type physical shared channel.

32. The method according to claim 31, wherein the one or more DCI are used to indicate scheduling information of the first-type physical shared channel.

33. The method according to claim 1, wherein the PDCCH is a first PDCCH, and information carried by the first PDCCH comprises scheduling information of a second PDCCH.

34. The method according to claim 33, wherein the first PDCCH and the second PDCCH satisfy at least one relationship of:
a number of symbols of the second PDCCH being greater than or equal to a number of symbols of the first PDCCH;
a time domain position of the first PDCCH being before a time domain position of the second PDCCH;
the first PDCCH being mapped according to a CCE, and the second PDCCH being mapped according to a physical resource block, PRB;
the first PDCCH being mapped according to a first CCE, and the second PDCCH being mapped according to a second CCE;
the first PDCCH corresponds to a first reference signal, and the second PDCCH corresponds to a second reference signal.

35. The method according to claim 33, wherein the second PDCCH is used to schedule a shared channel, wherein the second PDCCH and the shared channel have a same mapping mode, time domain resource range, frequency domain resource range, antenna port, or reference signal; or the second PDCCH is before the shared channel.

36. The method according to claim 1, wherein the first indication message is indicated based on at least one of: DCI, MAC CE signaling, RRC signaling, a sequence, and a wake-up signal.

37. A communication method, applied to a second node, wherein the method comprises:
sending a first indication message, wherein the first indication message is used to determine a parameter of a physical downlink control channel, PDCCH;
processing the PDCCH based on the first indication message.

38. A communication apparatus, comprising: a memory and a processor; wherein the memory is coupled with the processor; the memory is configured to store instructions executable by the processor; and the processor, upon executing the instructions, is configured to perform the method according to any one of claims 1 to 37.

39. A computer-readable storage medium, wherein computer instructions are stored on the computer-readable storage medium, and when the computer instructions are run on a computer, the computer performs the method according to any one of claims 1 to 37.
